# EUROPÄISCHE PATENTSCHRIFT

(11) **EP 2 417 183 B1**
(45) Veröffentlichungstag und Bekanntmachung des Hinweises auf die Patenterteilung: **16.01.2013**
(21) Anmeldenummer: 10710584.3
(22) Anmeldetag: 25.03.2010
(51) Int. Cl.: C08G 65/00

(54) **HÄRTBARE ZUSAMMENSETZUNG**
CURABLE COMPOSITION
COMPOSITION DURCISSABLE

(30) Priorität: 06.04.2009 DE 102009002230
(43) Veröffentlichungstag der Anmeldung: 15.02.2012
(73) Patentinhaber: Henkel AG & Co. KGaA, 40589 Düsseldorf (DE)
(72) Erfinder: BOLTE, Andreas, 40627 Düsseldorf (DE); BOUDET, Helene, 40227 Düsseldorf (DE); SCHÖTTMER, Bernhard, 40789 Monheim (DE); SPIELKAMP, Nick, 45259 Essen (DE)
(86) Internationale Anmeldenummer: PCT/EP2010/053878
(87) Internationale Veröffentlichungsnummer: WO 2010/115715

(56) Entgegenhaltungen:
- EP-A1- 0 520 426
- WO-A1-2007/091961
- DE-A1- 3 100 746
- DE-A1- 19 502 128
- US-A- 4 323 488

## Beschreibung

Die Erfindung betrifft härtbare Zusammensetzungen auf Basis alkoxy- und/oder acyloxysilanterminierter Polymere und spezieller Füllstoffe, deren Herstellung und Verwendung.

Polymersysteme, die über reaktive Silylgruppen verfügen, sind bekannt. Diese silanvernetzenden Polymere weisen in der Regel ein organisches Grundgerüst auf, das an den Enden z. B. Alkoxy- oder Acyloxysilylgruppen trägt. In Gegenwart von Luftfeuchtigkeit sind solche Polymere, die über Silylgruppen mit hydrolysierbaren Substituenten verfügen, bereits bei Raumtemperatur in der Lage miteinander zu kondensieren. Je nach Gehalt an Silylgruppen mit hydrolysierbaren Substituenten und dem Aufbau dieser Silylgruppen bilden sich dabei hauptsächlich langkettige Polymere (Thermoplaste), relativ weitmaschige, dreidimensionale Netzwerke (Elastomere) oder hochvernetzte Systeme (Duroplaste).

Auch der Einsatz dieser Polymersysteme als Bindemittelkomponente in härtbaren Zusammensetzungen, insbesondere in silanvernetzenden Kleb-, Dicht- oder Beschichtungsstoffen ist bekannt. Diese härtbaren Zusammensetzungen enthalten in der Regel neben dem Bindemittel mindestens einen Füllstoff. Die Zugabe des Füllstoffs erfolgt zum einen aus Kostengründen, zum anderen lassen sich dadurch sowohl die Eigenschaften der härtbaren Zusammensetzung, als auch des daraus hergestellten ausgehärteten Produkts beeinflussen.

Es sind bereits eine Vielzahl geeigneter Füllstoffe beschrieben worden. Typische Füllstoffe sind etwa Kreide, Kalkmehl, Kieselsäure, Tonerde und andere gemahlene Mineralstoffe, aber auch organische Füllstoffe, wie etwa Ruß, Graphit oder Holzfasern.

Zur Herstellung härtbarer Zusammensetzungen besonders niedriger Dichte wurde verschiedentlich die Verwendung anorganischer oder organischer Mikrohohlkugeln als Füllstoff vorgeschlagen. Unter Mikrohohlkugeln versteht man geometrische Gebilde, die als Ballon oder Ball bezeichnet werden können, und eine Hülle aus anorganischem oder organischem Material aufweisen, wobei diese Hülle einen Hohlraum vollständig umschließt. In der Regel ist der Hohlraum mit einem Gas oder einer Flüssigkeit gefüllt. Die geometrischen Gebilde weisen weitgehend Kugelform auf, können aber auch von der Form einer idealen Kugel abweichen und etwa eiförmig ausgebildet sein oder kleinere Ausbeulungen aufweisen. Der Durchmesser der einzelnen Kugel beträgt maximal 1 mm, vorzugsweise maximal 500 µm.

Anorganische Mikrohohlkugeln, beispielsweise Glasmikrohohlkugeln sind vergleichsweise spröde, so dass die Gefahr besteht, diese bereits beim Einmischen in die härtbare Zusammensetzung zu zerstören und damit den gewünschten Effekt zunichte zu machen. Zudem wird die Stabilität des ausgehärteten Produkts verringert.

US 2004/0236009 A1 offenbart härtbare Zusammensetzungen, die ein härtbares Material und ein Material, das die Dichte reduziert, enthalten, wobei letzteres Klebe- und Dichteigenschaften der härtbaren Zusammensetzung nicht wesentlich beeinflussen soll. Als härtbares Material werden silanmodifizierte Polymere genannt. Bei dem Material, das die Dichte reduziert, handelt es sich typischerweise um Mikrohohlkugeln. Beispielhaft sind Mikrohohlkugeln genannt, die unter dem Markennamen Expancel^{®} erhältlich sind. Genauere Angaben dazu, welche der vielfältigen Produkte, die unter dieser Bezeichnung vertrieben werden, gemeint sind, fehlen. Selbst in den Beispielen ist generell von Expancel^{®} die Rede.

Aus EP 0 520 426 B1 sind härtbare Zusammensetzungen bekannt, die ein vernetzendes silanmodifiziertes Oxyalkylenpolymer und Mikrohohlkugeln auf Basis eines Vinylidenchlorid-Polymers bzw. Copolymers enthalten. Entsprechende Mikrohohlkugeln werden beispielsweise unter der Markenbezeichnung Expancel^{®} vertrieben. Es wird ausgeführt, dass der Einsatz gerade dieser Mikrohohlkugeln im Vergleich zum Einsatz anderer Mikrohohlkugeln zu verbesserten Eigenschaften des ausgehärteten Produkts führt. So können vergleichsweise niedrige Module erzielt werden, ohne dass die Dehnbarkeit verschlechtert wird. Für viele Anwendungen ist es jedoch wünschenswert, dass die mechanischen Eigenschaften der aus härtbaren Zusammensetzungen, insbesondere aus Dicht- und Klebstoffen, hergestellten Produkte noch weiter verbessert werden.

Aufgabe der vorliegenden Erfindung war es daher, härtbare Zusammensetzungen niedriger Dichte zur Verfügung zu stellen, die sich zu Produkten mit verbesserten mechanischen Eigenschaften verarbeiten lassen. Insbesondere sollten sich die ausgehärteten Produkte durch niedrige Module und gleichzeitig hohe Dehnbarkeit auszeichnen.

Es wurde nun überraschend gefunden, dass die Aufgabe durch Verwendung von Mikrohohlkugeln aus speziellen Methacrylnitril-(Meth)acrylat-Copolymeren, gelöst werden kann.

Gegenstand der vorliegenden Erfindung sind daher härtbare Zusammensetzungen, enthaltend
a) ein alkoxy- und / oder acyloxysilanterminiertes Polymer mit mindestens einer Endgruppe der allgemeinen Formel (I)

   -Aₙ-R-SiXYZ (I),

   worin
   - A für eine zweibindige Bindegruppe,
   - R für einen zweibindigen, gegebenenfalls ein Heteroatom enthaltenden Kohlenwasserstoffrest mit 1 - 12 C-Atomen, und
   - X, Y, Z jeweils unabhängig voneinander für einen C₁-C₈ - Alkyl-, C₁-C₈ - Alkoxy- oder C₁-C₈ - Acyloxyrest stehen, wobei mindestens einer der Reste X, Y, Z ein C₁-C₈ - Alkoxy- oder C₁-C₈ - Acyloxyrest ist, und
   - n für 0 oder 1 steht; und
b) Mikrohohlkugeln aus einem Copolymer, das durch Polymerisation von Methacrylnitril und mindestens einem Monomer M2 ausgewählt aus Acrylsäure, Methacrylsäure, Acrylsäurealkylestern und Methacrylsäurealkylestern erhältlich ist, wobei das Copolymer maximal 5 Gew.-% Einheiten enthält, die auf den Einbau weiterer Monomere zurückgehen und frei von chlorhaltigen Einheiten ist.

Die erfindungsgemäßen härtbaren Zusammensetzungen zeichnen sich insbesondere dadurch aus, dass sie sich zu Produkten mit niedrigem Modul und gleichzeitig hoher Dehnbarkeit verarbeiten lassen. Vorteilhaft ist weiterhin, dass keine Polymere auf Basis von Vinylidenchlorid eingesetzt werden müssen. Der Einsatz chlorhaltiger Polymere ist aus ökologischen Gründen bedenklich. So ist bekannt, dass bei der Zersetzung oder Verbrennung solcher Polymere umwelt- und gesundheitsschädliche Verbindungen entstehen können. Diese Problematik lässt sich durch den erfindungsgemäßen Einsatz von Mikrohohlkugeln auf Basis chlorfreier Polymere vermeiden.

Bei den erfindungsgemäßen härtbaren Zusammensetzungen handelt es sich vorzugsweise um silanvernetzende Kleb-, Dicht- oder Beschichtungsstoffe, die als Bindemittel ein oder mehrere organische Polymere enthalten, die an wenigstens einem Terminus eine Silylgruppe tragen, die ihrerseits mindestens eine, vorzugsweise zwei oder drei, Alkoxygruppe(n) oder Acyloxygruppe(n) enthalten. Diese polymeren Verbindungen werden als alkoxy- und / oder acyloxysilanterminierte Polymere bezeichnet. In Gegenwart von Luftfeuchtigkeit bzw. bei Inkontaktbringen mit Wasser sind Polymere, die über Silylgruppen mit derartigen hydrolysierbaren Substituenten verfügen, bereits bei Raumtemperatur in der Lage, unter Abspaltung der hydrolysierbaren Reste miteinander zu kondensieren. Je nach Gehalt an Silylgruppen mit hydrolysierbaren Substituenten und dem Aufbau dieser Silylgruppen bilden sich dabei hauptsächlich langkettige Polymere (Thermoplaste), relativ weitmaschige, dreidimensionale Netzwerke (Elastomere) oder hochvernetzte Systeme (Duroplaste). Die erfindungsgemäßen härtbaren Zusammensetzungen enthalten demnach als Bindemittel im Wesentlichen organische Polymere bzw. siliziumorganische Polymere, bestehend aus einem organischen Grundgerüst mit Kohlenstoffatomen in der Hauptkette. Vorteil der erfindungsgemäßen Ausgestaltung, insbesondere der Verwendung von alkoxy- und / oder acyloxysilanterminierten Polymeren als Bindemittel, gegenüber anorganischen Bindemitteln sind insbesondere die gute Anhaftung auf/an verschiedensten Substraten, sowie die hohe Elastizität der Gerüststruktur.

Das in den erfindungsgemäßen härtbaren Zusammensetzungen enthaltene alkoxy- und / oder acyloxysilanterminierte Polymer weist mindestens eine Endgruppe der allgemeinen Formel I

-Aₙ-R-SiXYZ (I)

auf.

A steht in Formel (I) für eine zweibindige Bindegruppe. Darunter wird eine zweibindige bzw. bivalente chemische Gruppe verstanden, die das Polymergerüst des alkoxy- und / oder acyloxysilanterminierten Polymers mit dem Rest R der Endgruppe verknüpft. Die zweibindige Bindegruppe A kann beispielsweise bei der Herstellung des alkoxy- und / oder acyloxysilanterminierten Polymers ausgebildet werden, z.B. als Urethangruppe durch die Reaktion eines mit Hydroxygruppen funktionalisierten Polyethers mit einem isocyanatofunktionellen Alkoxysilan. Dabei kann die bivalente Bindegruppe von im zugrunde gelegten Polymergerüst auftretenden Strukturmerkmalen sowohl unterscheidbar als auch nicht unterscheidbar sein. Letzteres liegt beispielsweise vor, wenn sie mit den Verknüpfungspunkten der Wiederholungseinheiten des Polymergerüsts identisch ist. In diesem Fall entspräche n dem Wert 0. Ist die Bindegruppe A von den Verknüpfungsgruppen im Polymergerüst unterscheidbar, entspricht n dem Wert 1.

Unter isocyanatofunktionellen Alkoxysilanen werden kurzkettige, monomere Verbindungen mit einer terminalen Silylgruppe im Sinne der obigen Definition verstanden, die an mindesten einem weiteren Terminus eine Isocyanat-Funktion (-NCO) enthalten. Durch Reaktionen von Polymeren, die gegenüber Isocyantfunktionen reaktive Gruppen, z. B. Hydroxy- oder Aminogruppen, enthalten, mit isocyanatofunktionellen Alkoxysilanen können alkoxysilanterminierte Prepolymere oder Polymere erhalten werden.

Vorzugsweise steht A für eine Amid-, Carbamat-, Hamstoff-, Imino-, Carboxylat-, Carbamoyl-, Amidino-, Carbonat-, Sulfonat- oder Sulfinatgruppe oder ein Sauerstoff- oder Stickstoffatom.

Im Stand der Technik werden mehrere Methoden beschrieben, um eine reaktive Silylgruppe mit einem Polymergerüst zu verknüpfen. Genannt sei die Polymerisation von ungesättigten Monomeren mit solchen, die z. B. Alkoxysilylgruppen aufweisen. Ein dafür geeignetes Monomer der letztgenannten Sorte wäre beispielsweise Vinyltrimethoxysilan. Eine weitere Methode ist das Aufpfropfen von ungesättigten Monomeren wie z. B. Vinyltrimethoxysilan auf Thermoplaste, beispielsweise auf Polyethylen. Vielfach angewandt wird auch die Hydrosilylierung, die Addition von Silanen bzw. H-Silanen wie beispielsweise Methyldimethoxysilan an Kohlenstoff-Kohlenstoff-Doppelbindungen unter Edelmetallkatalyse. Durch dieses Verfahren wird der die terminale Silylgruppe enthaltende Rest direkt, d. h. ohne eine weitere Bindegruppe, mit dem polymeren Grundgerüst verknüpft (n = 0 in Formel (I)).

Besonders bevorzugt als Bindegruppe sind Urethan- und Harnstoffgruppen, die durch Umsetzung bestimmter funktioneller Gruppen eines Prepolymers mit einem Organosilan, welches eine weitere funktionelle Gruppe trägt, erhalten werden können. Urethangruppen können z. B. entstehen, wenn entweder das Polymergerüst terminale Hydroxylgruppen enthält und als weitere Komponente isocyanatofunktionelle Alkoxysilane, die gelegentlich auch als Isocyanatosilane bezeichnet werden, eingesetzt werden, oder wenn umgekehrt ein Polymer, welches endständige Isocyanatgruppen aufweist, mit einem terminale Hydroxygruppen enthaltenden Alkoxysilan (hydroxyfunktionelles Alkoxysilan) umgesetzt wird. Auf ähnliche Weise können Harnstoffgruppen erhalten werden, wenn eine terminale primäre oder sekundäre Aminogruppe - entweder am Silan oder am Polymer - eingesetzt wird, die mit einer im jeweiligen Reaktionspartner vorhandenen terminalen Isocyanatgruppe reagiert. Das bedeutet, dass entweder ein aminofunktionelles Alkoxysilan (Aminosilan) mit einem terminale Isocyanatgruppen aufweisenden Polymer oder ein terminal mit einer Aminogruppe substituiertes Polymer mit einem isocyanatofunktionellen Alkoxysilan zur Reaktion gebracht wird.

Urethan- und Harnstoffgruppen erhöhen vorteilhaft die Festigkeit der Polymerketten und des gesamten vernetzten Polymers, weil sie Wasserstoffbrücken ausbilden können.

Unter hydroxy- oder aminofunktionellen Alkoxysilanen werden kurzkettige, monomere Verbindungen mit einer terminalen Silylgruppe verstanden, die an mindestens einem weiteren Terminus eine Hydroxy- oder eine primäre oder sekundäre Aminogruppe aufweisen. Sowohl die Hydroxy- als auch die Aminogruppe weisen also mindestens ein bewegliches Wasserstoffatom auf und sind gegenüber Polymeren mit endständigen Isocyanatgruppen - reaktiv.

Als isocyanatofunktionelle Alkoxysilane bzw. Isocyanatosilane können beispielsweise eingesetzt werden: Trimethoxysilylmethylisocyanat, Triethoxysilylmethylisocyanat, Trimethoxysilylethylisocyanat, Triethoxysilylethylisocyanat, Trimethoxysilylpropylisocyanat, Triethoxysilylpropylisocyanat, Trimethoxysilylbutylisocyanat, Triethoxysilylbutylisocyanat, Trimethoxysilylpentylisocyanat, Triethoxysilylpentylisocyanat, Trimethoxysilylhexylisocyanat, Triethoxysilylhexylisocyanat, Methyldimethoxysilylmethylisocyanat, Ethyldimethoxysilylmethylisocyanat, Methyldiethoxysilylmethylisocyanat, Ethyldiethoxysilylmethylisocyanat, Methyldimethoxysilylethylisocyanat, Ethyldimethoxysilylethylisocyanat, Methyldiethoxysilylethylisocyanat, Ethyldiethoxysilylethylisocyanat, Methyldimethoxysilylpropylisocyanat, Ethyldimethoxysilylpropylisocyanat, Methyldiethoxysilylpropylisocyanat, Ethyldiethoxysilylpropylisocyanat, Methyldimethoxysilylbutylisocyanat, Ethyldimethoxysilylbutylisocyanat, Methyldiethoxysilylbutylisocyanat, Diethylethoxysilylbutylisocyanat, Ethyldiethoxysilylbutylisocyanat, Methyldimethoxysilylpentylisocyanat, Ethyldimethoxysilylpentylisocyanat, Methyldiethoxysilylpentylisocyanat, Ethyldiethoxysilylpentylisocyanat, Methyldimethoxysilylhexylisocyanat, Ethyldimethoxysilylhexylisocyanat, Methyldiethoxysilylhexylisocyanat, Ethyldiethoxysilylhexylisocyanat.

Besonders bevorzugt werden Trimethoxysilylmethylisocyanat, Triethoxysilylmethylisocyanat, Trimethoxysilylpropylisocyanat und Triethoxysilylpropylisocyanat, Methyldimethoxysilylmethylisocyanat, Methyldiethoxysilylmethylisocyanat, Methyldimethoxysifylpropylisocyanat und Ethyldimethoxysilylpropylisocyanat verwendet.

Bei der Reaktion mit einem terminale Hydroxylgruppen aufweisenden Polymer werden das oder die Isocyanatosilan(e) dabei in mindestens stöchiometrischer Menge zu den Hydroxylgruppen des Polymers eingesetzt; bevorzugt wird jedoch ein geringer stöchiometrischer Überschuss der Isocyanatosilane gegenüber den Hydroxylgruppen.

n steht in Formel (I) für 0 oder 1, d.h. die zweibindige Bindegruppe A verknüpft das Polymergrundgerüst mit dem Rest R (n = 1) oder das Polymergerüst ist direkt mit dem Rest R verbunden bzw. verknüpft (n = 0).

Der Rest R ist ein zweibindiger, gegebenenfalls ein Heteroatom enthaltender Kohlenwasserstoffrest mit 1 bis 12 Kohlenstoffatomen. Als Heteroatom kann beispielsweise Sauerstoff (O) oder Stickstoff (N) enthalten sein. Bei dem Kohlenwasserstoffrest kann es sich beispielsweise um einen geradkettigen oder verzweigten oder cyclischen, substituierten oder unsubstituierten Alkylenrest handeln. Der Kohlenwasserstoffrest kann gesättigt oder ungesättigt sein.

X, Y und Z sind unabhängig voneinander C₁ - C₈ - Alkylreste, C₁ - C₈ - Alkoxyreste oder C₁ - C₈ - Acyloxyreste. Dabei muss mindestens einer der Reste X, Y, Z eine hydrolysierbare Gruppe, d.h. eine C₁ - C₈ - Alkoxygruppe bzw. -rest oder eine C₁ - C₈ - Acyloxygruppe bzw. -rest sein. Als hydrolysierbare Gruppen werden vorzugsweise Alkoxygruppen, insbesondere Methoxy-, Ethoxy-, Propyloxy- und Butyloxygruppen, gewählt. Dies ist vorteilhaft, da bei der Aushärtung Alkoxygruppen enthaltender Zusammensetzungen keine die Schleimhäute reizenden Stoffe freigesetzt werden. Die gebildeten Alkohole sind in den freigesetzten Mengen unbedenklich und verdunsten. Daher eignen sich solche Zusammensetzungen insbesondere für den Heimwerkerbereich. Als hydrolysierbare Gruppen können jedoch auch Acyloxygruppen, wie beispielsweise eine Acetoxygruppe -O-CO-CH₃, verwendet werden.

Nach einer bevorzugten Ausführungsform der erfindungsgemäßen härtbaren Zusammensetzung weist das alkoxy- und / oder acyloxysilanterminierte Polymer mindestens zwei Endgruppen der allgemeinen Formel (I) auf. Jede Polymerkette enthält damit mindestens zwei Verknüpfungsstellen, an denen sich unter Abspaltung der hydrolysierbaren Reste in Gegenwart von Luftfeuchtigkeit die Kondensation der Polymere vollziehen kann. Auf diese Weise wird eine regelmäßige und schnelle Vernetzbarkeit erreicht, so dass beispielsweise Verklebungen mit guten Festigkeiten erhalten werden können. Darüber hinaus lässt sich über die Menge und den Aufbau der hydrolysierbaren Gruppen - z. B. Verwendung von Di- oder Trialkoxysilylgruppen, Methoxygruppen oder längere Reste usw. - die Ausgestaltung des erzielbaren Netzwerks als langkettiges System (Thermoplaste), relativ weitmaschiges dreidimensionales Netzwerk (Elastomere) oder hochvernetztes System (Duroplaste) steuern, so dass damit unter anderem die Elastizität, die Flexibilität und die Hitzebeständigkeit der fertig vernetzten Zusammensetzungen beeinflusst werden können. Bevorzugt weist das alkoxy- und / oder acyloxysilanterminierte Polymer zwei Endgruppen der allgemeinen Formel (I) auf, es kann aber beispielsweise auch drei Endgruppen der allgemeinen Formel (I) aufweisen.

In einer weiteren bevorzugten Ausführungsform steht X für eine C₁ - C₈ - Alkylgruppe und Y und Z jeweils unabhängig voneinander für eine C₁ - C₈ - Alkoxygruppe, oder alle drei Reste X, Y und Z stehen jeweils unabhängig voneinander für eine C₁ - C₈ - Alkoxygruppe. Generell verfügen Polymere, die Di- bzw. Trialkoxysilylgruppen enthalten, über hoch reaktive Verknüpfungsstellen, die ein schnelles

Aushärten, hohe Vernetzungsgrade und damit gute Endfestigkeiten ermöglichen. Ein weiterer Vorteil solcher Alkoxygruppen enthaltender Polymere ist darin zu sehen, dass bei der Aushärtung unter dem Einfluss von Feuchtigkeit, d.h. der Hydrolyse der hydrolysierbaren Gruppen, Alkohole gebildet werden, die in den freigesetzten Mengen unbedenklich sind und verdunsten. Daher eignen sich derartige Zusammensetzungen insbesondere auch für den Heimwerkerbereich. Der besondere Vorteil der Verwendung von Dialkoxysilylgruppen liegt darin, dass die entsprechenden Zusammensetzungen nach der Aushärtung elastischer, weicher und flexibler sind als Trialkoxysilylgruppen enthaltende Systeme. Sie sind deshalb insbesondere für eine Anwendung als Dichtstoffe geeignet. Darüber hinaus spalten sie bei der Aushärtung noch weniger Alkohol ab und sind deshalb besonders interessant, wenn die Menge an freigesetztem Alkohol reduziert werden soll.

Mit Trialkoxysilylgruppen hingegen lässt sich ein höherer Vernetzungsgrad erreichen, was besonders vorteilhaft ist, wenn nach der Aushärtung eine härtere, festere Masse gewünscht wird. Darüber hinaus sind Trialkoxysilylgruppen reaktiver, vernetzen also schneller und senken somit die Menge an gegebenenfalls notwendigem Katalysator. Sie weisen zudem Vorteile beim "kalten Fluss", der Formstabilität eines entsprechenden Klebstoffs unter dem Einfluss von Kraft- und gegebenenfalls Temperatureinwirkung, auf.

Besonders bevorzugt ist eine Ausführungsform, bei der es sich bei der genannten C₁ - C₈ - Alkylgruppe um eine Methyl- oder eine Ethylgruppe, und bei der C₁ - C₈ - Alkoxygruppe um eine Methoxy- oder eine Ethoxygruppe handelt. Methoxy- und Ethoxygruppen als vergleichsweise kleine hydrolysierbare Gruppen mit geringem sterischen Anspruch sind sehr reaktiv und ermöglichen somit ein schnelles Aushärten auch bei geringem Katalysatoreinsatz. Sie sind deshalb insbesondere für Systeme interessant, bei denen ein schnelles Aushärten erwünscht ist, wie beispielsweise bei Klebstoffen, die eine hohe Anfangshaftung aufweisen sollen.

Insbesondere ist eine Ausführungsform bevorzugt, bei der es sich bei der genannten C₁ - C₈ - Alkylgruppe um eine Methylgruppe, und bei der C₁ - C₈ - Alkoxygruppe um eine Methoxygruppe handelt.

Verbindungen mit Alkoxysilylgruppen weisen je nach Natur der Alkylreste am Sauerstoffatom unterschiedliche Reaktivitäten bei chemischen Reaktionen auf. Dabei zeigt innerhalb der Alkoxygruppen die Methoxygruppe die größte Reaktivität. Auf derartige Silylgruppen kann also zurückgegriffen werden, wenn eine besonders schnelle Aushärtung gewünscht wird. Höhere aliphatische Reste wie Ethoxy bewirken eine im Vergleich zu Methoxygruppen bereits geringere Reaktivität der terminalen Alkoxysilylgruppe und können vorteilhaft zur Ausprägung abgestufter Vernetzungsgeschwindigkeiten eingesetzt werden.

Interessante Gestaltungsmöglichkeiten eröffnen auch Kombinationen beider Gruppen. Wird z. B. für X Methoxy und für Y Ethoxy innerhalb derselben Alkoxysilylgruppe gewählt, kann die gewünschte Reaktivität der abschließenden Silylgruppen besonders feinstufig eingestellt werden, falls ausschließlich Methoxygruppen tragende Silylgruppen als zu reaktiv und die Ethoxygruppen tragenden Silylgruppen für den Einsatzzweck als zu träge empfunden werden.

Neben Methoxy- und Ethoxygruppen können selbstverständlich auch größere Reste als hydrolysierbare Gruppen eingesetzt werden, die naturgemäß eine geringere Reaktivität aufweisen. Dies ist besonders dann von Interesse, wenn eine verzögerte Aushärtung gewünscht ist, beispielsweise bei Klebstoffen, die auch nach der Applikation noch ein Verschieben der verklebten Flächen gegeneinander zum Finden der endgültigen Position ermöglichen sollen.

In einer weiteren bevorzugten Ausführungsform der erfindungsgemäßen härtbaren Zusammensetzung steht R in Formel (I) für einen Kohlenwasserstoffrest mit 1 bis 6 C-Atomen, insbesondere mit 1 bis 3 C-Atomen. Über die Länge der Kohlenwasserstoffreste, die das Bindeglied zwischen Polymergerüst und Silylrest bilden, kann die Aushärtungsgeschwindigkeit der Zusammensetzung beeinflusst werden, wodurch eine weitere Gestaltungsmöglichkeit eröffnet wird.

Besonders bevorzugt steht R für einen Methylen-, Ethylen- oder Propylenrest. Ganz besonders bevorzugt steht R für einen Methylen- oder 1,3-Propylenrest.

Alkoxysilan-terminierte Verbindungen mit einer Methylengruppe als Bindeglied zum Polymergerüst - sogenannte α-Silane - weisen eine besonders hohe Reaktivität der abschließenden Silylgruppe auf, was zu verkürzten Abbindezeiten und damit zu einer sehr schnellen Aushärtung von Formulierungen auf der Basis solcher Polymere führt. Generell führt eine Verlängerung der verbindenden Kohlenwasserstoffkette zu einer verminderten Reaktivität der Polymere. Insbesondere die γ-Silane - sie enthalten den unverzweigten Propylenrest als Bindeglied - weisen ein ausgewogenes Verhältnis zwischen nötiger Reaktivität (akzeptable Aushärtungszeiten) und verzögerter Aushärtung (offene Zeit, Möglichkeit zur Korrektur nach erfolgter Verklebung) auf.

Durch ein bewusstes Kombinieren von α- und γ-Alkoxysilan-terminierten Bausteinen kann die Aushärtungsgeschwindigkeit der Systeme wunschgemäß beeinflusst werden.

Im Rahmen einer weiteren bevorzugten Ausführungsform weist das alkoxy- und/oder acyloxysilanterminierte Polymer ein Grundgerüst auf, das ausgewählt ist aus der Gruppe Polyurethane, Polyether, Polyester, Polyacrylate, Polymethacrylate, Polyacrylamide, Polymethacrylamide, Polyvinylester, Polyolefine, Alkydharze, Phenolharze, Vinylpolymere, Styrol-Butadien-Copolymere, sowie Copolymere aus einem oder mehreren der vorgenannten Grundgerüste.

Durch die Auswahl und die spezifische Ausgestaltung der für das Grundgerüst verwendeten Polymerklassen können wesentliche Eigenschaften der erfindungsgemäßen härtbaren Zusammensetzung - wie z. B. Viskosität und Elastizität, aber auch die Widerstandsfähigkeit gegen Umwelteinflüsse - eingestellt werden.

Besonders bevorzugt werden für den Aufbau des Grundgerüstes Polyurethane und Polyester sowie Polyether, insbesondere Polyurethane und Polyether, eingesetzt.

Der Einsatz von Polyurethanen und Polyestern eröffnet vielfältige Anwendungsmöglichkeiten, weil mit beiden Polymerklassen je nach Wahl und stöchiometrischen Verhältnissen der Ausgangsstoffe sehr unterschiedliche mechanische Eigenschaften realisiert werden können. Polyester können darüber hinaus von Wasser und Bakterien zersetzt werden und sind deshalb für Anwendungen, bei denen eine biologische Abbaubarkeit wichtig ist, interessant.

Polymere, die Polyether als Grundgerüst enthalten, weisen nicht nur an den Endgruppen, sondern auch im Polymerrückgrat eine flexible und elastische Struktur auf. Damit lassen sich Zusammensetzungen herstellen, die ausgezeichnete elastische Eigenschaften aufweisen. Dabei sind Polyether nicht nur in ihrem Grundgerüst flexibel, sondern gleichzeitig beständig. So werden sie beispielsweise von Wasser und Bakterien nicht angegriffen oder zersetzt.

Im Rahmen der vorliegenden Erfindung werden unter Verfügbarkeitsaspekten und wegen ihrer hervorragenden elastischen Eigenschaften besonders bevorzugt Polyether auf der Basis von Polyethylenoxid und / oder Polypropylenoxid eingesetzt.

Nach einer besonders bevorzugten Ausführungsform der erfindungsgemäßen härtbaren Zusammensetzung weist das alkoxy- und/oder acyloxysilanterminierte Polymer ein Polyether oder Polyurethan Grundgerüst auf und die Bindegruppe A ist eine Urethan- oder Harnstoffgruppe, wobei das alkoxy- und / oder acyloxysilanterminierte Polymer vorzugsweise zwei Endgruppen der allgemeinen Formel (I) aufweist, die Di- oder Trimethoxysilylreste besitzen, beispielsweise Di- oder Trimethoxysilylpropylreste und Di- oder Trimethoxysilylmethylreste.

Vorzugsweise weist das alkoxy- und / oder acyloxysilanterminierte Polymer ein Molekulargewicht Mₙ von 4.000 bis 60.000, vorzugsweise 6.000 bis 50.000, besonders bevorzugt 8.000 bis 20.000, insbesondere 12.000 bis 20.000 g/mol auf. Unter dem Molekulargewicht Mₙ wird das zahlenmittlere Molekulargewicht des Polymeren verstanden. Dieses kann, ebenso wie das gewichtsmittlere Molekulargewicht M_{w}, durch Gelpermeationschromatographie (GPC) bestimmt werden. Ein solches Verfahren ist dem Fachmann bekannt.

Die angegebenen Molekulargewichte sind besonders vorteilhaft, da die entsprechenden Zusammensetzungen ein ausgewogenes Verhältnis von Viskosität (leichte Verarbeitbarkeit), Festigkeit und Elastizität aufweisen. Sehr vorteilhaft ist diese Kombination in einem Molekulargewichtsbereich von 8.000 bis 20.000, insbesondere von 12.000 bis 20.000 ausgeprägt.

Vorzugsweise ist im Rahmen der vorliegenden Erfindung das Verhältnis M_{w}/Mₙ des alkoxy- und / oder acyloxysilanterminierten Polymers kleiner als 1,5. Dies gilt insbesondere für alkoxy- und/oder acyloxysilanterminierte Polymere, deren Grundgerüst ein Polyether oder ein Polyacrylat ist. Im Falle eines Polyurethans ist es bevorzugt, wenn die Polyolbausteine bzw. -blöcke (z.B. Polyether oder hydroxyterminierte Polyacrylate) ein Verhältnis M_{w}/Mₙ von kleiner als 1,5 aufweisen. Das Verhältnis M_{w}/Mₙ, das auch als Polydispersität bezeichnet wird, gibt die Breite der Molmassenverteilung und damit der unterschiedlichen Polymerisationsgrade der einzelnen Ketten bei polydispersen Polymeren an. Für viele Polymerisate und Polykondensate gilt für die Polydispersität ein Wert von etwa 2. Strenge Monodispersität wäre bei einem Wert von 1 gegeben. Die im Rahmen der vorliegenden Erfindung bevorzugte Polydispersität von kleiner als 1,5 deutet auf eine vergleichsweise enge Molekulargewichtsverteilung und damit auf die spezifische Ausprägung mit dem Molekulargewicht zusammenhängender Eigenschaften, wie z. B. der Viskosität, hin. Besonders bevorzugt weist das alkoxy- und / oder acyloxysilanterminierte Polymer (bzw. die Polyolbausteine) eine Polydispersität (M_{w}/Mₙ) von kleiner als 1,3 auf.

Als weiteren zwingenden Bestandteil enthalten die erfindungsgemäßen härtbaren Zusammensetzungen Mikrohohlkugeln aus einem Copolymer, das durch Polymerisation von Methacrylnitril und mindestens einem Monomer M2 ausgewählt aus Acrylsäure, Methacrylsäure, Acrylsäurealkylestern und Methacrylsäurealkylestern erhältlich ist, wobei das Copolymer maximal 5 Gew.-% Einheiten enthält, die auf den Einbau weiterer Monomere zurückgehen und frei von chlorhaltigen Einheiten ist.

Frei von chlorhaltigen Einheiten bedeutet in diesem Zusammenhang, dass das Copolymer keine Struktureinheiten aufweist, die auf den Einbau von Monomeren zurückgehen, deren Struktur ein Chloratom enthält. Demnach ist auch das Copolymer selbst chlorfrei.

Vorzugsweise werden Mikrohohlkugeln aus einem Copolymer eingestzt, das durch Polymerisation von Methacrylnitril und mindestens einem Monomer M2 ausgewählt aus Acrylsäure, Methacrylsäure, Acrylsäurealkylestern und Methacrylsäurealkylestern erhältlich ist, wobei das Copolymer maximal 1 Gew.-% Einheiten enthält, die auf den Einbau weiterer Monomere zurückgehen. Vorzugsweise handelt es sich bei den Copolymeren um solche die ausschließlich aus Polymereinheiten aufgebaut sind, die aus dem Einbau von Methacrylnitril und mindestens einem Monomer M2 ausgewählt aus Acrylsäure, Methacrylsäure, Acrylsäurealkylestern und Methacrylsäurealkylestern in das Copolymer resultieren.

Bevorzugte Monomere M2 sind Acrylsäure, Methacrylsäure, Acrylsäure-C₁₋₂₀-alkylester und Methacrylsäure-C₁₋₂₀-alkylester.

Besonders bevorzugt ist Monomer M2 ausgewählt aus Acrylsäure, Methacrylsäure, Acrylsäuremethylester, Methacrylsäuremethylester, Acrylsäureethylester, Methacrylsäureethylester, Acrylsäurepropylester, Methacrylsäurepropylester, Acrylsäureisopropylester, Methacrylsäureisopropylester, Acrylsäureoctyllester, Methacrylsäureoctylester, Acrylsäuredecylester, Methacrylsäureccdecylester, Acrylsäurelauyrlester, Methacrylsäurelaurylester, Acrylsäuremyristylester, Methacrylsäuremyristylester, Acrylsäurecetylester, Methacrylsäurecetylester, Acrylsäurestearylester, Methacrylsäurestearylester, Acrylsäureeicosylester und Methacrylsäureeicosylester, ganz besonders bevorzugt aus Acrylsäure, Methacrylsäure, Acrylsäuremethylester, Methacrylsäuremethylester, Acrylsäureethylester, Methacrylsäureethylester, Acrylsäurelaurylester, Methacrylsäurelaurylester, Acrylsäurestearylester und Methacrylsäurestearylester.

Ganz besonders bevorzugt handelt es sich bei dem Monomer M2 um Acrylsäure, Methacrylsäure, Acrylsäuremethylester und/oder Methacrylsäuremethylester, insbesondere um Methacrylsäuremethylester.

Besonders bevorzugt enthalten die erfindungsgemäßen härtbaren Zusammensetzungen demnach Mikrohohlkugeln aus einem Methacrylnitril-Methacrylsäuremethylester-Copolymer.

Dabei ist es insbesondere bevorzugt, dass in die Mikrohohlkugeln gasförmige oder flüchtige Kohlenwasserstoffe, wie beispielsweise Propan, n-Butan, Isobutan, n-Pentan, Isopentan oder Neopentan, eingeschlossen sind.

Mikrohohlkugeln, die Isopentan enthalten, sind besonders bevorzugt.

Die erfindungsgemäße härtbare Zusammensetzung enthält die Mikrohohlkugeln vorzugsweise in einer Menge von 0,01 bis 5 Gew.-%, besonders bevorzugt 0,1 bis 2,5 Gew.-%, ganz besonders bevorzugt 0,2 bis 1 Gew.-%, jeweils bezogen auf das Gesamtgewicht der härtbaren Zusammensetzung.

Neben den genannten Mikrohohlkugeln können die erfindungsgemäßen Zusammensetzungen einen oder mehrere weitere Füllstoffe enthalten.

Als weitere Füllstoffe eignen sich beispielsweise Kreide, Kalkmehl, gefällte und/oder pyrogene Kieselsäure, Bentonite, Magnesiumcarbonat, Kieselgur, Tonerde, Ton, Talg, Titanoxid, Eisenoxid, Zinkoxid, Sand, Quartz, Flint, Glimmer, Glaspulver und andere gemahlene Mineralstoffe sowie Ruß und Graphit. Weiterhin können auch organische Füllstoffe eingesetzt werden, insbesondere Holzfasern, Holzmehl, Sägespäne, Zellstoff, Baumwolle, Pulpe, Hackschnitzel, Häcksel, Spreu, andere Faserkurzschnitte und gemahlene Walnussschalen. Ferner können auch Kurzfasern wie Glasfaser, Glasfilament, Polyacrylnitril, Kohlefaser, Kevlarfaser oder auch Polyethylenfasern zugesetzt werden. Aluminiumpulver ist ebenfalls als Füllstoff geeignet.

Darüber hinaus eignen sich als weitere Füllstoffe Hohlkugeln mit einer mineralischen Hülle oder einer Kunststoffhülle, die sich von den oben genannten zwingend enthaltenen speziellen Mikrohohlkugeln unterscheiden. Dies können beispielsweise Glashohlkugeln sein, die unter den Handelsbezeichnungen Glass Bubbles^{®} kommerziell erhältlich sind. Hohlkugeln auf Kunststoffbasis sind z.B. unter den Handelsbezeichnungen Expancel^{®} oder Dualite^{®} erhältlich. Diese sind aus anorganischen oder organischen Stoffen zusammengesetzt, jede mit einem Durchmesser von 1 mm oder weniger, bevorzugt von 500 µm oder weniger.

Die Füllstoffe werden vorzugsweise in einer Menge von 1 bis 200 Gewichtsteilen, bezogen auf 100 Gewichtsteile des alkoxy- und/oder acyloxysilanterminierten Polymers, eingesetzt. Bevorzugt sind Gewichtsanteile von 5 bis 125, insbesondere 10 bis 60, Gewichtsteilen Füllstoffe bezogen auf 100 Gewichtsteile des alkoxy- und/oder acyloxysilanterminierten Polymers. Es kann ein einzelner Füllstoff oder eine Kombination mehrerer Füllstoffe verwendet werden. Diese Mengenangaben beziehen sich jeweils auf den Gesamtgehalt an Füllstoffen in den härtbaren Zusammensetzungen, d.h. auf die Summe der Anteile an den oben genannten zwingend enthaltenen speziellen Mikrohohlkugeln und an weiteren Füllstoffen.

Für manche Anwendungen sind Füllstoffe bevorzugt, die den Zubereitungen Thixotropie verleihen. Solche Füllstoffe werden auch als rheologische Additive bzw. Hilfsmittel beschrieben, z. B., Kieselgele, Aerosile, Kohle, Ruß oder quellbare Kunststoffe wie PVC. Ferner können als rheologische Modifikatoren folgende organische Additive eingesetzt werden: hydrogenisiertes Rizinusöl, Fettsäureamide, Harnstoffderivate und Polyharnstoffderivate.

In einer besonderen Ausführungsform der erfindungsgemäßen härtbaren Zusammensetzung enthält diese als weiteren Füllstoff eine hochdisperse Kieselsäure mit einer BET-Oberfläche von 10 bis 90 m²/g, insbesondere von 35 bis 65 m²/g. Bei ihrer Verwendung bewirkt eine derartige Kieselsäure keine wesentliche Erhöhung der Viskosität der Zusammensetzung, trägt aber zu einer Verstärkung der gehärteten Zubereitung bei. Über diese Verstärkung werden z. B. die Anfangsfestigkeiten, Zugscherfestigkeiten und die Adhäsion der Kleb-, Dicht- oder Beschichtungsstoffe verbessert.

Bevorzugt wird eine hochdisperse Kieselsäure mit einer BET-Oberfläche von 45 bis 55 m²/g eingesetzt, insbesondere mit einer BET-Oberfläche von etwa 50 m²/g. Derartige Kieselsäuren weisen den zusätzlichen Vorteil einer um 30 bis 50 % verkürzten Einarbeitungszeit im Vergleich zu Kieselsäuren mit höherer BET-Oberfläche auf. Ein weiterer Vorteil liegt darin, dass sich die genannte hochdisperse Kieselsäure in die erfindungsgemäße härtbare Zusammensetzung in erheblich höherer Konzentration einarbeiten lässt, ohne dass die Fließeigenschaften der Zusammensetzung beeinträchtigt werden.

Es ist ebenso denkbar, pyrogene und/oder gefällte Kieselsäuren mit einer höheren BET-Oberfläche, vorteilhafterweise mit 100 - 250 m²/g, insbesondere 110 - 170 m²/g, als weiteren Füllstoff einzusetzen. Die Einarbeitung derartiger Kieselsäuren dauert allerdings vergleichsweise lange und ist damit kostenintensiver. Darüber hinaus werden erhebliche Mengen Luft in das Produkt eingebracht, die wiederum umständlich und langwierig entfernt werden müssen. Andererseits kann der Effekt einer Verstärkung der gehärteten Zubereitung aufgrund der höheren BET-Oberfläche bei einem geringeren Gewichtsanteil Kieselsäure erzielt werden. Auf diese Weise lassen sich weitere Stoffe einbringen, um die erfindungsgemäße Zubereitung hinsichtlich anderer Anforderungen zu verbessern.

In einer bevorzugten Ausführungsform der erfindungsgemäßen härtbaren Zusammensetzung enthält diese mindestens einen weiteren Füllstoff, vorzugsweise eine Kreide, wobei diese gegebenenfalls beschichtet sein kann.

Prinzipiell können als weitere Füllstoffe alle Komponeten eingesetzt werden, die bekanntermaßen für diesen Zweck geeignet sind. Vorzugsweise enthalten die erfindungsgemäßen härtbaren Zusammensetzungen jedoch keine Mikrohohlkugeln aus Vinylidenchlorid-haltigen Polymeren, besonders bevorzugt enthalten sie keinerlei chlorhaltige Füllstoffe. So wird sichergestellt, dass sich bei Zersetzung oder Verbrennung der erfindungsgemäßen härtbaren Zusammensetzungen bzw. daraus hergestellter ausgehärteter Produkte keine umwelt- und/oder gesundheitsschädlichen chlorhaltigen Verbindungen bilden.

Die erfindungsgemäßen härtbaren Zusammensetzungen können weiterhin alle Hilfs- und Zusatzstoffe und sonstige Additive enthalten, die üblicherweise solchen Zusammensetzungen, insbesondere silanvernetzenden Kleb-, Dicht- oder Beschichtungsstoffen, zugegeben werden. Diese können den Zusammensetzungen verbesserte elastische Eigenschaften, verbesserte Rückstellfähigkeit, verbesserte Verarbeitbarkeit, ausreichend lange Verarbeitungszeit, schnelle Durchhärtungsgeschwindigkeit und geringe Restklebrigkeit verleihen. Zu diesen Hilfs- und Zusatzstoffen gehören beispielsweise Haftvermittler, Katalysatoren, sowie Weichmacher. Darüber hinaus können die Zusammensetzungen als weitere Additive beispielsweise Stabilisatoren, Antioxidantien, Reaktiwerdünner, Trockenmittel, UV-Stabilisatoren, Alterungsschutzmittel, rheologische Hilfsmittel, Farbpigmente oder Farbpasten, Fungizide, Flammschutzmittel und/oder gegebenenfalls auch in geringem Umfang Lösungsmittel enthalten.

So können die Zusammensetzungen beispielsweise Trockenmittel enthalten. Als Trockenmittel eignen sich alle Verbindungen, die mit Wasser unter Bildung einer gegenüber den in der Zusammensetzung vorliegenden reaktiven Gruppen inerten Gruppe reagieren, und hierbei möglichst geringe Veränderungen ihres Molekulargewichts erfahren. Weiterhin muss die Reaktivität der Trockenmittel gegenüber in die Zusammensetzung eingedrungener Feuchtigkeit höher sein als die Reaktivität der Endgruppen des in den erfindungsgemäßen Zusammensetzungen vorliegenden Silylgruppen-tragenden Polymers.

Als Trockenmittel eignen sich beispielsweise Isocyanate. Auch Silane können als Trockenmittel eingesetzt werden, beispielsweise Vinylsilane, wie 3-Vinylpropyltriethoxysilan, Benzamidosilane, wie Bis(N-methylbenzamido)methylethoxysilan, oder Carbamatosilane, wie Carbamatomethyltrimethoxysilan. Auch die Verwendung von Methyl-, Ethyl-, Vinyltrimethoxysilan oder anderer Alkyltrimethoxysilane, Tetramethyl-, Tetraethoxy- oder Ethylethoxysilan ist möglich. Bevorzugt sind hier Vinyltrimethoxysilan und Tetraethoxysilan.

Schließlich können als Trockenmittel auch Alkylorthoformiate oder-orthoacetate eingesetzt werden, beispielsweise Methyl- oder Ethylorthoformiat, Methyl- oder Ethylorthoacetat.

Falls Trockenmittel zugegeben werden, so werden diese vorzugsweise in einer Menge bis zu 10 Gewichtsteile, bezogen auf 100 Gewichtsteile des alkoxy- und/oder acyloxysilanterminierten Polymers eingesetzt.

Nach einer bevorzugten Ausführungsform der erfindungsgemäßen härtbaren Zusammensetzung enthält diese einen Weichmacher.

Unter einem Weichmacher wird eine Substanz verstanden, welche die Viskosität der Zusammensetzungen verringert und damit die Verarbeitbarkeit erleichtert und darüber hinaus Flexibilität und Dehnungsvermögen der Zusammensetzungen verbessert. Es können ein oder mehrere Weichmacher verwendet werden.

Bevorzugt ist der Weichmacher ausgewählt aus einem Fettsäureester, einem Dicarbonsäureester, einem Ester OH-Gruppen tragender oder epoxidierter Fettsäuren, einem Fett, einem Glykolsäureester, einem Phthalsäureester, einem Benzoesäureester, einem Phosphorsäureester, einem Sutfonsäureester, einem Trimellithsäureester, einem epoxidierten Weichmacher, einem Polyether-Weichmacher, einem Polystyrol, einem Kohlenwasserstoff-Weichmacher und einem chlorierten Paraffin, sowie Gemischen aus zwei oder mehreren davon. Diese Weichmacher verbinden besonders vorteilhaft ihre eigentliche Funktion - Erleichterung der Verarbeitbarkeit, Verbesserung von Flexibilität und Dehnungsvermögen der Zusammensetzungen - mit einer geeigneten Ausprägung weiterer vorteilhafter Eigenschaften. So können durch die gezielte Auswahl eines dieser Weichmacher oder einer spezifischen Kombination weitere vorteilhafte Eigenschaften der erfindungsgemäßen härtbaren Zusammensetzungen, z. B. Geliervermögen der Polymere, Kälteelastizität bzw. Kältebeständigkeit oder auch antistatische Eigenschaften realisiert werden.

Beispielsweise eignen sich aus der Gruppe der Phthalsäureester Dioctylphthalat, Dibutylphthalat, Diisoundecylphthalat, Diisononylphthalat oder Butylbenzylphthalat, von den Adipaten Dioctyladipat, Diisodecyladipat, ferner Diisodecylsuccinat, Dibutylsebacat oder Butyloleat.

Von den Polyether-Weichmachem werden bevorzugt endgruppenverschlossene Polyethylenglykole eingesetzt, beispielsweise Polyethylen- oder Polypropylenglykoldi-C₁₋₄-alkylether, insbesondere die Dimethyl- oder Diethylether von Diethylenglykol oder Dipropylenglykol, sowie Gemische aus zwei oder mehr davon.

Ebenfalls als Weichmacher geeignet sind beispielsweise Ester der Abietinsäure, Buttersäureester, Essigsäureester, Propionsäureester, Thiobuttersäureester, Zitronensäureester, Ester auf Nitrocellulose- und Polyvinylacetat-Basis, sowie Gemische aus zwei oder mehr davon. Geeignet sind beispielsweise auch die asymmetrischen Ester von Adipinsäuremonooctylester mit 2-Ethylhexanol (Edenol DOA, Fa. Cognis Deutschland GmbH, Düsseldorf).

Darüber hinaus sind als Weichmacher geeignet die reinen oder gemischten Ether monofunktioneller, linearer oder verzweigter C₄₋₁₆-Alkohole oder Gemische aus zwei oder mehr verschiedenen Ethern solcher Alkohole, beispielsweise Dioctylether (erhältlich als Cetiol OE, Fa. Cognis Deutschland GmbH, Düsseldorf).

Ebenfalls im Rahmen der vorliegenden Erfindung als Weichmacher geeignet sind Diurethane, welche sich beispielsweise durch Umsetzung von Diolen mit OH-Endgruppen mit monofunktionellen Isocyanaten herstellen lassen, wobei die Stöchiometrie so gewählt wird, dass im wesentlichen alle freien OH-Gruppen abreagieren. Gegebenenfalls überschüssiges Isocyanat kann anschließend beispielsweise durch Destillation aus dem Reaktionsgemisch entfernt werden. Eine weitere Methode zur Herstellung von Diurethanen besteht in der Umsetzung von monofunktionellen Alkoholen mit Diisocyanaten, wobei möglichst sämtliche NCO-Gruppen abreagieren.

Die erfindungsgemäßen härtbaren Zusammensetzungen können bis zu 400 Gewichtsteile Weichmacher bezogen auf 100 Gewichtsteile des alkoxy- und/oder acyloxysilanterminierten Polymers enthalten. Bevorzugt sind Gewichtsanteile von 5 bis 150, insbesondere 50 bis 125, Gewichtsteile Weichmacher bezogen auf 100 Gewichtsteile des alkoxy- und/oder acyloxysilanterminierten Polymers.

Eine für bestimmte Anwendungen zu hohe Viskosität der erfindungsgemäßen härtbaren Zusammensetzung kann auch durch Verwendung eines Reaktivverdünners auf einfache und zweckmäßige Weise verringert werden, ohne dass es zu Entmischungserscheinungen (z.B. Weichmacherwanderung) in der ausgehärteten Masse kommt.

Vorzugsweise weist der Reaktivverdünner mindestens eine funktionelle Gruppe auf, die nach der Applikation z. B. mit Feuchtigkeit oder Luftsauerstoff reagiert. Beispiele für derartige Gruppen sind Silylgruppen, Isocyanatgruppen, vinylisch ungesättigte Gruppen und mehrfach ungesättigte Systeme.

Als Reaktivverdünner kann man alle Verbindungen, die mit der erfindungsgemäßen härtbaren Zusammensetzung unter Verringerung der Viskosität mischbar sind und über mindestens eine mit dem Bindemittel reaktive Gruppe verfügen, allein oder als Kombination mehrerer Verbindungen einsetzen.

Die Viskosität des Reaktivverdünners beträgt bevorzugt weniger als 20.000 mPas, besonders bevorzugt etwa 1 - 6.000 mPas, ganz besonders bevorzugt 100 - 1.000 mPas (Brookfield RVT, 23°C, Spindel 7, 10 U/min).

Als Reaktivverdünner lassen sich z. B. folgende Stoffe einsetzen: mit Isocyanatosilanen umgesetzte Polyalkylenglykole (z.B. Synalox 100-50B, DOW), Alkyltrimethoxysilan, Alkyltriethoxysilan, wie Methyltrimethoxysilan, Methyltriethoxysilan, sowie Vinyltrimethoxysilan, Phenyltrimethoxysilan, Phenyltriethoxysilan, Octyltrimethoxysilan, Tetraethoxysilan, Vinyldimethoxymethylsilan, Vinyltriethoxysilan, Vinyltriacetoxysilan, Isooctyltrimethoxysilan, Isooctyltriethoxysilan, N-Trimethoxysilylmethyl-O-methylcarbamat, N-Dimethoxy(methyl)silylmethyl-O-methyl-carbamat, Hexadecyltrimethoxysilan, 3-Octanoylthio-1-propyltriethoxysilan und Teilhydrolysate dieser Verbindungen.

Ferner sind ebenfalls folgende Polymere von Kaneka Corp. als Reaktivverdünner einsetzbar: MS S203H, MS S303H, MS SAT 010, und MS SAX 350.

Weiterhin als Reaktivverdünner geeignet sind Polymere, die aus einem organischen Grundgerüst durch Pfropfen mit einem Vinylsilan oder durch Umsetzung von Polyol, Polyisocyanat und Alkoxysilan herstellbar sind.

Unter einem Polyol wird eine Verbindung verstanden, die im Molekül zwei oder mehrere OH - Gruppen enthält. Die OH -Gruppen können sowohl primär als auch sekundär sein.

Geeignete Polyole sind beispielsweise aliphatische Diole wie Ethylenglykol, Propylenglykol und höhere Glykole, sowie andere polyfunktionelle Alkohole. Die Polyole können zusätzlich weitere funktionelle Gruppen wie z.B. Ester, Carbonate, Amide enthalten.

Zur Herstellung eines Reaktivverdünners durch Umsetzung von Polyol mit Polyisocyanat und Alkoxysilan wird die entsprechende Polyolkomponente jeweils mit einem mindestens difunktionellen Isocyanat umgesetzt. Als mindestens difunktionelles Isocyanat kommt grundsätzlich jedes Isocyanat mit mindestens zwei Isocyanatgruppen in Frage, in der Regel sind jedoch im Rahmen der vorliegenden Erfindung Verbindungen mit zwei bis vier Isocyanatgruppen, insbesondere mit zwei Isocyanatgruppen bevorzugt. Die Alkoxysilane weisen bevorzugt Alkoxysilylgruppen mit Di- und Trialkoxysilylgruppen auf.

Als Polyisocyanate zur Herstellung eines Reaktivverdünners eignen sich beispielsweise Ethylendiisocyanat, 1,4-Tetramethylendiisocyanat, 1,4-Tetramethoxybutandiisocyanat, 1,6-Hexamethylendiisocyanat (HDI), Cyclobutan-1,3-diisocyanat, Cyclohexan-1,3- und -1,4-diisocyanat, Bis(2-isocyanato-ethyl)fumarat, sowie Gemische aus zwei oder mehr davon, 1-Isocyanato-3,3,5-trimethyl-5-isocyanatomethylcyclohexan (Isophorondiisocyanat, IPDI), 2,4- und 2,6-Hexahydrotoluylendiisocyanat, Hexahydro-1,3- oder -1 ,4-phenylendiisocyanat, Benzidindiisocyanat, Naphthalin-1,5-diisocyanat, 1,6-Diisocyanato-2,2,4-trimethylhexan, 1,6-Diisocyanato-2,4,4-trimethylhexan, Xylylendiisocyanat (XDI), Tetramethylxylylendiisocyanat (TMXDI), 1,3- und 1,4-Phenylendiisocyanat, 2,4- oder 2,6-Toluylendiisocyanat (TDI), 2,4'-Diphenylmethandiisocyanat, 2,2'-Diphenylmethandiisocyanat oder 4,4'-Diphenylmethandiisocyanat (MDI) oder deren partiell oder vollständig hydrierte Cycloalkylderivate, beispielsweise vollständig hydriertes MDI (H12-MDI), alkylsubstituierte Diphenylmethandiisocyanate, beispielsweise Mono-, Di-, Tri- oder Tetraalkyldiphenylmethandiisocyanat sowie deren partiell oder vollständig hydrierte Cycloalkylderivate, 4,4'-Diisocyanatophenylperfluorethan, Phthalsäure-bisisocyanatoethylester, 1-Chlormethylphenyl-2,4- oder -2,6-diisocyanat, 1-Brommethylphenyl-2,4- oder - 2,6-diisocyanat, 3,3-Bis-chlormethylether-4,4'-diphenyldiisocyanat, schwefelhaltige Diisocyanate, wie sie durch Umsetzung von 2 mol Diisocyanat mit 1 mol Thiodiglykol oder Dihydroxydihexylsulfid erhältlich sind, die Di- und Triisocyanate der Di- und Trimerfettsäuren, oder Gemische aus zwei oder mehr der genannten Diisocyanate.

Ebenso kann man als Polyisocyanate drei- oder höherwertige Isocyanate, wie sie beispielsweise durch Oligomerisierung von Diisocyanaten, insbesondere durch Oligomerisierung der oben genannten Isocyanate, erhältlich sind, einsetzen. Beispiele für solche drei- und höherwertigen Polyisocyanate sind die Tri-isocyanurate von HDI oder IPDI oder deren Gemische oder deren gemischte Triisocyanurate, sowie Polyphenylmethylenpolyisocyanat, wie es durch Phosgenierung von Anilin-Formaldehyd-Kondensationsprodukten erhältlich ist.

Die Reaktivverdünner können in den gleichen Gewichtsanteilen wie die Weichmacher in den erfindungsgemäßen härtbaren Zusammensetzungen eingesetzt werden.

Die oben genannten Reaktivverdünner können auch als (zusätzliche) Trockenmittel wirken, sofern sie ein Molekulargewicht (Mₙ) von weniger als etwa 5.000 g/mol aufweisen und über Endgruppen verfügen, deren Reaktivität gegenüber eingedrungener Feuchtigkeit mindestens genauso groß, bevorzugt größer, ist als die Reaktivität der reaktiven Gruppen der in den erfindungsgemäßen Zusammensetzungen enthaltenen Silylgruppen-tragenden Polymere.

Zur Reduzierung der Viskosität der erfindungsgemäßen härtbaren Zusammensetzung lassen sich neben oder anstatt eines Reaktivverdünners auch Lösungsmittel einsetzen.

Als Lösungsmittel eignen sich aliphatische oder aromatische Kohlenwasserstoffe, halogenierte Kohlenwasserstoffe, Alkohole, Ketone, Ether, Ester, Esteralkohole, Ketoalkohole, Ketoether, Ketoester und Etherester. Vorzugsweise werden allerdings Alkohole eingesetzt, da in diesem Fall die Lagerstabilität steigt. C₁-C₁₀-Alkohole, besonders Methanol, Ethanol, i-Propanol, Isoamylalkohol und Hexanol werden besonders bevorzugt.

Die erfindungsgemäße härtbare Zusammensetzung kann außerdem einen oder mehrere Haftvermittler enthalten. Unter einem Haftvermittler wird eine Substanz verstanden, die die Haftungseigenschaften von Klebeschichten auf Oberflächen verbessert.

Es können übliche, dem Fachmann bekannte Haftvermittler (Tackifier) allein oder als Kombination mehrerer Verbindungen eingesetzt werden. Geeignet sind beispielsweise Harze, Terpen-Oligomere, Cumaron-/Inden-Harze, aliphatische, petrochemische Harze und modifizierte Phenolharze. Geeignet sind im Rahmen der vorliegenden Erfindung beispielsweise Kohlenwasserstoffharze, wie sie durch Polymerisation von Terpenen, hauptsächlich α- oder β-Pinen, Dipenten oder Limonen gewonnen werden. Die Polymerisation dieser Monomere erfolgt in der Regel kationisch unter Initiierung mit Friedel-Crafts-Katalysatoren. Zu den Terpenharzen werden auch Copolymere aus Terpenen und anderen Monomeren, beispielsweise Styrol, α-Methylstyrol, Isopren und dergleichen, gerechnet. Die genannten Harze finden beispielsweise als Haftvermittler für Haftklebstoffe und Beschichtungsmaterialien Verwendung. Ebenfalls geeignet sind die Terpen-Phenol-Harze, die durch säurekatalysierte Addition von Phenolen an Terpene oder Kolophonium hergestellt werden. Terpen-Phenol-Harze sind in den meisten organischen Lösemitteln und Ölen löslich und mit anderen Harzen, Wachsen und Kautschuk mischbar. Ebenfalls im Rahmen der vorliegenden Erfindung als Haftvermittler im oben genannten Sinne geeignet sind die Kolophoniumharze und deren Derivate, beispielsweise deren Ester oder Alkohole.

Besonders gut geeignet sind Silan-Haftvermittler, insbesondere Alkoxysilane, mit einer (weiteren) funktionellen Gruppe wie z.B. einer Aminogruppe, einer Mercaptogruppe, einer Epoxygruppe, einer Carboxylgruppe, einer Vinylgruppe, einer Isocyanatgruppe, einer Isocyanuratgruppe oder einem Halogen. Beispiele sind γ-Mercaptopropyltrimethoxysilan, γ-Mercaptopropyltriethoxysilan, γ-Mercaptopropylmethyldimethoxysilan, γ-Glycidoxypropyltrimethoxysilan, γ-Glycidoxypropyltriethoxysilan, γ-Glycidoxypropylmethyldimethoxysilan, β-Carboxyethyltriethoxysilan, β-Carboxyethylphenylbis(2-methoxyethoxy)silan, N-β-(Carboxymethyl) aminoethyl-γ-aminopropyltrimethoxysilan, Vinyltrimethoxysilan, Vinyltriethoxysilan, γ-Acroyloxypropylmethyltriethoxysilan, γ-Isocyanatopropyltrimethoxysilan, γ-Isocyanatopropyltriethoxysilan, γ-Isocyanatopropylmethyldiethoxysilan, γ-Isocyanatopropylmethyldimethoxysilan, Tris(trimethoxysilyl)isocyanurat und γ-Chloropropyltrimethoxysilan.

Besonders bevorzugt als Haftvermittler sind insbesondere Aminosilane (aminofunktionelle Alkoxysilane bzw. Aminoalkylalkoxysilane), wie z.B. γ-Aminopropyltrimethoxysilan, γ-Aminopropyltriethoxysilan, γ-Aminopropyltriisopropoxysilan, γ-Aminopropylmethyldimethoxysilan, γ-Aminopropylmethyldiethoxysilan, γ-(2-Aminoethyl)-3-aminopropyltrimethoxysilan, γ-(2-Aminoethyl) aminopropylmethyldimethoxysilan, γ-(2-Aminoethyl)aminopropyltriethoxysilan, γ-(2-Aminoethyl) aminopropylmethyldiethoxysilan, γ-(2-Aminoethyl) aminopropyltriisopropoxysilan, N-Phenyl-γ-aminopropyltrimethoxysilan, N-Benzyl-γ-aminopropyltrimethoxysilan, und N-Vinylbenzyl-γ-aminopropyltriethoxysilan, oder oligomere Aminosilane, wie z.B. aminoalkylgruppenmodifiziertes Alkylpolysiloxan (Dynasylan 1146).

Weiterhin als Haftvermittler bevorzugt ist ein Silan der allgemeinen Formel (II)

R¹R²N-R'-SiX'Y'Z' (II),

worin
- R¹ und R² unabhängig voneinander Wasserstoff oder C₁ - C₈ -Alkylreste,
- R' ein zweibindiger, gegebenenfalls ein Heteroatom enthaltender, Kohlenwasserstoffrest mit 1 - 12 C-Atomen, und
- X', Y', Z' unabhängig voneinander C₁ - C₈ - Alkyl-, C₁ - C₈ - Alkoxy- oder C₁ - C₈ - Acyloxyreste sind, wobei mindestens einer der Reste ein C₁ - C₈ - Alkoxy- oder C₁ - C₈ - Acyloxyrest bzw. - gruppe ist.

Derartige Verbindungen weisen naturgemäß eine hohe Affinität zu den bindenden Polymerkomponenten der erfindungsgemäßen härtbaren Zusammensetzung, aber auch zu einer großen Bandbreite an polaren, sowie unpolaren Oberflächen auf und tragen deshalb zur Ausbildung einer besonders stabilen Haftung zwischen der Kleb- oder Dichtstoffzusammensetzung und den jeweils zu verklebenden oder abzudichtenden Substraten bei.

Bei der Bindegruppe R' kann es sich beispielsweise um einen geradkettigen oder verzweigten oder cyclischen, substituierten oder unsubstituierten Alkylenrest handeln. Der Kohlenwasserstoffrest kann gesättigt oder ungesättigt sein. Gegebenenfalls ist als Heteroatom darin Stickstoff (N) oder Sauerstoff (O) enthalten. Bevorzugt ist R' ein Kohlenwasserstoffrest mit 1 bis 6 C-Atomen, insbesondere mit 1 bis 3 C-Atomen, beispielsweise Methylen oder n-Propylen.

Bevorzugt sind X', Y' und Z' jeweils unabhängig voneinander eine Methyl-, eine Ethyl-, eine Methoxy- oder eine Ethoxygruppe. Besonders bevorzugt sind X', Y' und Z' Alkoxygruppen, insbesondere Methoxygruppen. Ganz besonders bevorzugt ist die Gruppe -SiX'Y'Z' eine Trimethoxy- oder Dimethoxymethyl-silylgruppe. Wenn X', Y' und/oder Z' eine Acyloxygruppe sind, kann dies z. B. die Acetoxygruppe -OCC-CH₃ sein.

Der Haftvermittler ist in den erfindungsgemäßen härtbaren Zusammensetzungen vorzugsweise in einer Menge von 0,1 bis 25 Gewichtsteilen, bezogen auf 100 Gewichtsteile des alkoxy- und/oder acyloxysilanterminierten Polymers, enthalten. Bevorzugt sind Gewichtsanteile von 0,5 bis 10, insbesondere 1 bis 5, Gewichtsteilen Haftvermittler bezogen auf 100 Gewichtsteile des alkoxy- und/oder acyloxysilanterminierten Polymers.

Die erfindungsgemäße härtbare Zusammensetzung kann außerdem als weiteren Bestandteil einen Katalysator (Silan-Kondensationskatalysator bzw. Härtungs- oder Vernetzungskatalysator) umfassen. Als Vernetzungskatalysatoren zur Steuerung der Härtungsgeschwindigkeit der erfindungsgemäßen Zusammensetzungen sind beispielsweise metallorganische Verbindungen wie Eisen- oder Zinnverbindungen geeignet, insbesondere die 1,3-Dicarbonylverbindungen des Eisens wie z. B. Eisen-(III)-acetylacetonat oder des zwei- bzw. vierwertigen Zinns wie beispielsweise Dibutylzinnbisacetylacetonat, die Dialkylzinn-(IV)-Dicarboxylate - z. B. Dibutylzinndilaurat, Dibutylzinnmaleat oder Dibutylzinndiacetat - oder die entsprechenden Dialkoxylate, z. B. Dibutylzinndimethoxid. Gerade bei den zinnorganischen Verbindungen handelt es sich um wohl erprobte und einfach zugängliche Katalysatoren mit ausgezeichneter Aktivität. Einige Zinnorganyle sind jedoch aufgrund physiologischer und ökologischer Bedenken in die Kritik geraten. Deshalb ist die erfindungsgemäße Zusammensetzung in einer weiteren bevorzugten Ausführungsform zinnfrei. Dennoch lassen sich die Zusammensetzungen gegebenenfalls unter Verwendung alternativer Katalysatoren ohne Qualitätsverlust gut und schnell aushärten.

Als Härtungskatalysatoren können alternativ Borhalogenide wie Bortrifluorid, Bortrichlorid, Bortribromid, Bortrijodid oder gemischte Borhalogenide eingesetzt werden. Besonders bevorzugt sind Bortrifluoridkomplexe wie z.B. Bortrifluorid-diethyletherat, die als Flüssigkeiten einfacher handhabbar sind als gasförmige Borhalogenide.

Ferner sind im Allgemeinen Amine, Stickstoff-Heterocyclen und Guanidin-Derivate zur Katalyse geeignet. Ein besonders geeigneter Katalysator aus dieser Gruppe ist 1,8-Diazabicyclo-[5.4.0]-undec-7-en (DBU).

Darüber hinaus werden als Katalysatoren vorzugsweise Titan-, Aluminium- und Zirkonverbindungen oder Mischungen aus einem oder mehreren Katalysatoren aus einer oder mehreren der gerade erwähnten Gruppen eingesetzt. Einerseits kann auch auf diese Weise der Einsatz von Zinnverbindungen vermieden werden, zum anderen lässt sich eine bessere Adhäsion zu normalerweise schlecht anhaftenden organischen Oberflächen wie z. B. Acrylaten erreichen. Unter den Titan-, Aluminium- und Zirkonkatalysatoren werden die Titankatalysatoren bevorzugt eingesetzt, da mit ihnen die besten Härtungsergebnisse erzielt werden.

Als Titankatalysatoren eignen sich Verbindungen, die Hydroxygruppen und/oder substituierte oder unsubstituierte Alkoxygruppen aufweisen, also Titanalkoxide der allgemeinen Formel

Ti (OR^{z})₄,

wobei R^{z} eine organische Gruppe, vorzugsweise eine substituierte oder unsubstituierte Kohlenwasserstoffgruppe mit 1 bis 20 C-Atomen ist und die 4 Alkoxygruppen -OR^{z} gleich oder verschieden sind. Ferner können ein oder mehrere der Reste -OR^{z} durch Acyloxygruppen -OCOR^{z} ersetzt werden.

Ebenso eigenen sich als Titankatalysatoren Titanalkoxide, bei denen eine oder mehrere Alkoxygruppen durch eine Hydroxygruppe oder Halogenatome ersetzt sind.

Ferner lassen sich Titanchelatkomplexe einsetzen.

Auch Aluminiumkatalysatoren lassen sich als Härtungskatalysatoren einsetzen,
z.B. Aluminiumalkoxide

Al(OR^{z})₃,

wobei R^{z} obige Bedeutung hat, d.h. eine organische Gruppe, bevorzugt ein substituierter oder unsubstituierter Kohlenwasserstoffrest mit 1 bis 20 C-Atomen ist und die drei Reste R^{z} gleich oder verschieden sind. Auch bei den Aluminiumalkoxiden können ein oder mehrere der Alkoxyreste durch Acyloxyreste -OC(O)R^{z} ersetzt sein.

Ferner können Aluminiumalkoxide eingesetzt werden, bei denen ein oder mehrere Alkoxyreste durch eine Hydroxygruppe oder Halogenatome ersetzt sind.

Von den beschriebenen Aluminiumkatalysatoren sind die reinen Aluminiumalkoholate im Hinblick auf ihre Stabilität gegenüber Feuchtigkeit und die Härtbarkeit der Mischungen, denen sie zugesetzt werden, bevorzugt. Außerdem werden Aluminium-Chelatkomplexe bevorzugt.

Als Zirkonkatalysatoren eignen sich z.B.: Tetramethoxyzirkon, Tetraethoxyzirkon.

Ganz besonders bevorzugt werden Diisopropoxyzirkonbis(ethylacetoacetat),
Triisopropoxyzirkon(ethylacetoacetat) und Isopropoxyzirkontris(ethylacetoacetat) eingesetzt.

Ferner können beispielsweise Zirkonacylate eingesetzt werden.

Auch halogenierte Zirkonkatalysatoren lassen sich einsetzen.

Ferner können auch Zirkonchelatkomplexe eingesetzt werden.

Außerdem können als Härtungskatalysatoren Carbonsäuresalze von Metallen oder auch eine Mischung mehrerer solcher Salze herangezogen werden, wobei diese ausgewählt sind aus den Carboxylaten folgender Metalle: Calcium, Vanadium, Eisen, Zink, Titan, Kalium, Barium, Mangan, Nickel, Kobalt und/oder Zirkon.

Von den Carboxylaten sind die Calcium-, Vanadium-, Eisen-, Zink-, Titan-, Kalium-, Barium-, Mangan- und Zirkoniumcarboxylate bevorzugt, da sie eine hohe Aktivität aufweisen. Besonders bevorzugt werden Calcium-, Vanadium-, Eisen-, Zink-, Titan- und Zirkoniumcarboxylate. Ganz besonders bevorzugt werden Eisen- und Titancarboxylate.

Der Katalysator wird vorzugsweise in einer Menge von 0,001 bis etwa 10 Gewichtsteilen, bezogen auf 100 Gewichtsteile des alkoxy- und/oder acyloxysilanterminierten Polymers, eingesetzt. Bevorzugt sind Gewichtsanteile von 0,01 bis 1, insbesondere 0,03 bis 0,5, besonders bevorzugt kleiner als 0,1, Gewichtsteile Katalysator, bezogen auf 100 Gewichtsteile des alkoxy- und/oder acyloxysilanterminierten Polymers.

Es können auch Mischungen mehrerer Katalysatoren eingesetzt werden, um vorteilhafte Effekte zu kombinieren.

In einer bevorzugten Ausführungsform der Erfindung enthalten die härtbaren Zusammensetzungen neben mindestens einem alkoxy- und/oder acyloxysilanterminierten Polymer und den speziellen Mikrohohlkugeln mindestens einen der oben genannten Katalysatoren. Besonders bevorzugt enthalten sie zudem mindestens einen Weichmacher und ganz besonders bevorzugt darüber hinaus mindestens einen Haftvermittler. Die Mengen und bevorzugten Mengen, in denen diese Inhaltsstoffe enthalten sind, entsprechen dabei dem oben bei der Beschreibung des jeweiligen Inhaltsstoffs Gesagten.

Als weiteres Additiv kann die erfindungsgemäße härtbare Zusammensetzung Antioxidantien enthalten. Vorzugsweise beträgt der Anteil der Antioxidantien bis zu etwa 7 Gewichtsteile, bezogen auf 100 Gewichtsteile des alkoxy- und/oder acyloxysilanterminierten Polymers, insbesondere bis zu etwa 5 Gewichtsteile.

Die Zusammensetzung kann darüber hinaus UV-Stabilisatoren (UV-Absorber) enthalten. Vorzugsweise beträgt der Anteil der UV-Stabilisatoren bis zu etwa 2 Gewichtsteile, bezogen auf 100 Gewichtsteile des alkoxy- und/oder acyloxysilanterminierten Polymers, insbesondere etwa 1 Gewichtsteil. Als UV-Stabilisatoren besonders geeignet sind die so genannten Hindered Amine Light Stabilisators (HALS). Es ist im Rahmen der vorliegenden Erfindung bevorzugt, wenn ein UV-Stabilisator eingesetzt wird, der eine Silylgruppe trägt und beim Vernetzen bzw. Aushärten in das Endprodukt eingebaut wird. Hierzu besonders geeignet sind die Produkte Lowilite 75, Lowilite 77 (Fa. Great Lakes, USA). Ferner können auch Benzotriazole, Benzophenone, Benzoate, Cyanacrylate, Acrylate, sterisch gehinderte Phenole, Phosphor und / oder Schwefel zugegeben werden.

Die erfindungsgemäßen härtbaren Zusammensetzungen können weiterhin bis zu 10 Gewichtsteile weitere Additive, bezogen auf 100 Gewichtsteile des alkoxy- und/oder acyloxysilanterminierten Polymers, enthalten. Beispielsweise kommen als weitere Additive Pigmente, Stabilisatoren, Alterungsschutzmittel, Fungizide und Flammschutzmittel in Frage.

In einer weiteren bevorzugten Ausführungsform der erfindungsgemäßen härtbaren Zusammensetzung enthält diese
- 100 Gewichtsteile des alkoxy- und / oder acyloxysilanterminierten Polymers,
- 0,5 - 10 Gewichtsteile Haftvermittler,
- 5 - 150 Gewichtsteile Weichmacher,
- 0,01 - 1 Gewichtsteile Katalysator,
- 5 - 125 Gewichtsteile Füllstoff,
- 0,1 - 10 Gewichtsteile Trockenmittel, sowie
- 0 - 10 Gewichtsteile weitere Additive, wie Pigmente, Stabilisatoren, UV-Absorber, Alterungsschutzmittel, Antioxidantien, rheologische Hilfsmittel, Verdünner bzw. Reaktivverdünner und / oder Lösungsmittel, sowie Fungizide und Flammschutzmittel,
wobei der Füllstoff die Mikrohohlkugeln aus einem Copolymer enthält, das durch Polymerisation von Methacrylnitril und mindestens einem Monomer M2 ausgewählt aus Acrylsäure, Methacrylsäure, Acrylsäurealkylestern und Methacrylsäurealkylestern erhältlich ist, wobei das Copolymer maximal 5 Gew.-% Einheiten enthält, die auf den Einbau weiterer Monomere zurückgehen und frei von chlorhaltigen Einheiten ist.

Auf diesen Anteilsverhältnissen basierende Zusammensetzungen führen zu gut verarbeitbaren Kleb-, Dicht- oder Beschichtungsstoffen, die zugleich eine gute Festigkeit und Elastizität aufweisen. Durch eine spezifische Gewichtung der Anteile der Zusammensetzung können die Eigenschaften präzise auf das jeweilige Anwendungsgebiet abgestimmt werden.

Bezüglich bevorzugter Vertreter der einzelnen Inhaltsstoffe und deren Mengen gilt das oben Gesagte entsprechend.

In einer weiteren bevorzugten Ausführungsform beträgt die Viskosität der härtbaren Zusammensetzung 5.000 bis 500.000 mPas (gemessen mit einem Brookfield Viskosimeter Typ RVDVII +, Spindel Nr. 7, 10 Upm bei 23 °C). Besonders bevorzugt beträgt die Viskosität 50.000 bis 300.000 mPas. Diese Viskositäten ermöglichen eine gute Verarbeitbarkeit der Zusammensetzungen.

Ein weiterer Gegenstand der Erfindung ist ein Verfahren zur Herstellung einer erfindungsgemäßen härtbaren Zusammensetzung, das dadurch gekennzeichnet ist, dass mindestens
a) ein alkoxy- und / oder acyloxysilanterminiertes Polymer mit mindestens einer Endgruppe der allgemeinen Formel (I)

   -Aₙ-R-SiXYZ (I),

   worin
   - A für eine zweibindige Bindegruppe,
   - R für einen zweibindigen, gegebenenfalls ein Heteroatom enthaltenden Kohlenwasserstoffrest mit 1 - 12 C-Atomen, und
   - X, Y, Z jeweils unabhängig voneinander für einen C₁-C₈ - Alkyl-, C₁-C₈ - Alkoxy- oder C₁-C₈ - Acyloxyrest stehen, wobei mindestens einer der Reste X, Y, Z ein C₁-C₈ - Alkoxy- oder C₁-C₈ - Acyloxyrest ist, und
   - n für 0 oder 1 steht; und
b) Mikrohohlkugeln aus einem Copolymer, das durch Polymerisation von Methacrylnitril und mindestens einem Monomer M2 ausgewählt aus Acrylsäure, Methacrylsäure, Acrylsäurealkylestern und Methacrylsäurealkylestern erhältlich ist, wobei das Copolymer maximal 5 Gew.-% Einheiten enthält, die auf den Einbau weiterer Monomere zurückgehen und frei von chlorhaltigen Einheiten ist,
sowie gegebenenfalls Haftvermittler, Katalysator, Trockenmittel, Weichmacher, weitere Füllstoffe, und/oder weitere Additive miteinander gemischt werden.

Die einzelnen Komponenten bzw. Bestandteile der erfindungsgemäßen härtbaren Zusammensetzung, sowie die einzelnen Gruppen bzw. Reste und Indizes sind dabei wie vorstehend ausgeführt definiert.

Vorzugsweise wird bei dem erfindungsgemäßen Verfahren zur Herstellung einer härtbaren Zusammensetzung folgende Reihenfolge gewählt, die jedoch nicht zwingend ist: Zunächst wird, sofern vorhanden, Haftvermittler sowie Weichmacher vorgelegt und mit Trockenmittel vermischt. Anschließend wird das alkoxy- und/oder acyloxysilanterminierte Polymer unter Rühren zugegeben, bevor die Mikrohohlkugeln und gegebenenfalls weitere Füllstoffe oder Additive ebenfalls unter Rühren zugegeben werden. Als letztes wird gegebenenfalls unter Rühren der Katalysator zugesetzt. Vorzugsweise wird das Verfahren unter bestmöglichem Ausschluss von Feuchtigkeit durchgeführt, indem beispielsweise unter Inertgasatmosphäre gearbeitet wird.

Vorzugeweise handelt es sich bei den erfindungsgemäßen härtbaren Zusammensetzungen um silanvernetzende Kleb-, Dicht- oder Beschichtungsstoffe.

Ein weiterer Gegenstand der Erfindung ist demnach die Verwendung einer erfindungsgemäßen härtbaren Zusammensetzung oder einer härtbaren Zusammensetzung, hergestellt nach dem vorstehend beschriebenen erfindungsgemäßen Verfahren, als Klebstoff zum Verkleben von Kunststoffen, Metallen, Glas, Keramik, Holz, Holzwerkstoffen, Papier, Papierwerkstoffen, Gummi und Textilien oder als Dichtstoff zum Abdichten von Bauwerken oder Teilen davon, insbesondere zur Fugenabdichtung.

Bei derartigen Anwendungen lässt sich die erfindungsgemäße härtbare Zusammensetzung gut verarbeiten und applizieren und ermöglicht eine gute Festigkeit nach dem Aushärten, wobei sich die ausgehärteten Produkte insbesondere durch ein niedriges Modul bei gleichzeitig hoher Dehnbarkeit auszeichnen.

Im Folgenden wird die Erfindung anhand von Beispielen näher erläutert, wobei die Beispiele lediglich der Illustration der Erfindung dienen und keine Einschränkung des Erfindungsgedankens darstellen.

### Beispiele

Bei den im Folgenden angegebenen Mengenangaben handelt es sich - soweit nichts anderes vermerkt ist - um Gewichtsprozent.

### 1 Dichtstoffe

Es wurden Dichtstoffe mit einer Zusammensetzung gemäß Tabelle 1 hergestellt. Bei der Zusammensetzung B1 handelt es sich um eine erfindungsgemäße härtbare Zusammensetzung. Die Vergleichszusammensetzung V1 ist nicht erfindungsgemäß. Sie enthält keine Mikrohohlkugeln, die frei von chlorhaltigen Einheiten sind.

**Tabelle 1:**

| **Rohstoff-nummer** | **Handelsname** | **Allg. Rohstoffbezeichnung** | **B1 [%]** | **V1 [%]** |
|---|---|---|---|---|
| 1 | | Silanterminiertes organisches Polymer | 19,85 | 19,85 |
| 2 | Jayflex DIUP | Diisoundecylphthalat | 27,80 | 27,80 |
| 3 | Socal U1S2 | Kalziumcarbonat, beschichtet mit Stearinsäure | 42,25 | 42,25 |
| 4 | Expancel 920 DE 40 d 30 | Mikrohohlkugeln aus einem Copolymer aus Methacrylnitril und Methylmethacrylat, enthaltend Isobutan | 0,45 | - |
| 5 | Expancel 461 DET 40 d 25 | Mikrohohlkugeln aus einem Terpolymer aus Vinylidenchlorid, Methacrylnitril und Methylmethacrylat, enthaltend Isobutan | - | 0,45 |
| 6 | Titandioxid | Titandioxid | 3,00 | 3,00 |
| 7 | Disparlon 6500 | Synthetisches Polyamidwachs | 3,50 | 3,50 |
| 8 | Eversorb 74 | 2-(2'-Hydroxy-3',5'-di-tert-amylphenyl)-benzotriazol | 0,30 | 0,30 |
| 9 | Eversorb 90 | Bis(2,2,6,6-tetramethyl-4-piperidyl)sebacat | 0,30 | 0,30 |
| 10 | Geniosil XL10 | Vinyltrimethoxysilan | 1,50 | 1,50 |
| 11 | Geniosil GF96 | (3-Aminopropyl)trimethoxysilan | 0,50 | 0,50 |
| 12 | Dynasylan 1146 | Mit Aminoalkylgruppen modifiziertes Alkylpolysiloxan | 0,50 | 0,50 |
| 13 | Metatin Katalysator 740 | Di-n-butylzinnketonat | 0,05 | 0,05 |

### Herstellvorschrift für Rohstoff Nr. 1

Das silanterminierte organische Polymer wurde wie folgt hergestellt: 282 g (15 mmol) Polypropylenglykol 18000 (OHZ=6,0) wurden in einem 500 ml Dreihalskolben bei 100°C im Vakuum getrocknet. Unter Stickstoffatmosphäre wurde bei 80°C 0,1 g Borchi Kat 24 (Bismuth 2-ethylhexanoate) hinzugegeben und anschließend mit 7,2 g (32 mmol) 3-Isocyanatopropyltrimethoxysilan (NCO-Gehalt = 18,4%) versetzt. Nach einstündigem Rühren bei 80°C wurde das entstandene Polymer abgekühlt und anschließend mit 6 g Vinyltrimethoxysilan versetzt.

### Herstellvorschrift für die Dichtstoffe gemäß Tabelle 1

Die Herstellung der Dichtstoffe B1 und V1 erfolgte in einem Planeten-Dissolver-Mischer gemäß folgender Vorgehensweise:
1. Einwaage Rohstoff 1
2. Einwaage Rohstoff 2
3. Vermischen bei Raumtemperatur
4. Einwaage Rohstoffe 3, 6, 7, 8 und 9 und Vermischen bei Raumtemperatur, 5 Minuten
5. Einwaage Mikrohohlkugeln (Rohstoff 4 bzw. 5) und Vermischen bei Raumtemperatur, 3 Minuten
6. Vakuum ziehen
7. Aufheizen unter Rühren im Vakuum auf ca. 85°C
8. Rühren im Vakuum bei ca. 85°C, 20 Minuten
9. Abkühlen auf ca. 55°C
10. Einwaage Rohstoff 10
11. Vermischen, 3 Minuten
12. Einwaage Rohstoffe 11 und 12
13. Vermischen, 2 Minuten
14. Einwaage Rohstoff 13
15. Vakuum ziehen
16. Vermischen im Vakuum, 10 Minuten

### 2 Mechanische Eigenschaften

Aus den Dichtstoffen gemäß der Beispiele B1 und V1 wurden Prüfkörper hergestellt und diese hinsichtlich des Moduls bei 100% Dehnung und der Bruchdehnung untersucht. Die Ergebnisse sind in Tabelle 2 wiedergegeben.

Die Herstellung der Prüfkörper und die Prüfung des Zugverhaltens erfolgte dabei bei 23°C gemäß DIN EN ISO 8339-A mit eloxiertem Aluminium als Trägermaterial.

**Tabelle 2:**

| **Dichtstoff** | **Modul [N/mm²]** | **Bruchdehnung [%]** |
|---|---|---|
| B1 | 0,7 | 244 |
| V1 | 0,8 | 170 |

Wie Tabelle 2 zu entnehmen ist, lassen sich durch Verwendung von Mikrohohlkugeln aus einem Methacrylnitril/Methylmethacrylat Copolymer, das frei von chlorhaltigen Einheiten ist, Dichtstoffe erhalten, die sich bei leicht verbessertem Modul durch eine deutlich verbesserte Bruchdehnung auszeichnen.

## Patentansprüche

1. Härtbare Zusammensetzung, enthaltend
a) ein alkoxy- und / oder acyloxysilanterminiertes Polymer mit mindestens einer Endgruppe der allgemeinen Formel (I)
-Aₙ-R-SiXYZ (I),
worin
- A für eine zweibindige Bindegruppe,
- R für einen zweibindigen, gegebenenfalls ein Heteroatom enthaltenden Kohlenwasserstoffrest mit 1 - 12 C-Atomen, und
- X, Y, Z jeweils unabhängig voneinander für einen C₁-C₈ - Alkyl-, C₁-C₈ - Alkoxy- oder C₁-C₈ - Acyloxyrest stehen, wobei mindestens einer der Reste X, Y, Z ein C₁-C₈ - Alkoxy- oder C₁-C₈ - Acyloxyrest ist, und
- n für 0 oder 1 steht; und
b) Mikrohohlkugeln aus einem Copolymer, das durch Polymerisation von Methacrylnitril und mindestens einem Monomer M2 ausgewählt aus Acrylsäure, Methacrylsäure, Acrylsäurealkylestern und Methacrylsäurealkylestern erhältlich ist, wobei das Copolymer maximal 5 Gew.-% Einheiten enthält, die auf den Einbau weiterer Monomere zurückgehen und frei von chlorhaltigen Einheiten ist.

2. Härtbare Zusammensetzung nach Anspruch 1, **dadurch gekennzeichnet, dass** das alkoxy- und/oder acyloxysilanterminierte Polymer mindestens zwei Endgruppen der allgemeinen Formel (I) aufweist.

3. Härtbare Zusammensetzung nach Anspruch 1 oder 2, **dadurch gekennzeichnet, dass** X für eine C₁-C₈ - Alkylgruppe und Y und Z jeweils für eine C₁-C₈ - Alkoxygruppe stehen oder X, Y und Z jeweils für eine C₁-C₈ - Alkoxygruppe stehen.

4. Härtbare Zusammensetzung nach einem der vorhergehenden Ansprüche, **dadurch gekennzeichnet, dass** es sich bei der C₁-C₈ - Alkylgruppe um eine Methyl- oder Ethylgruppe, insbesondere eine Methylgruppe, und bei der C₁-C₈ - Alkoxygruppe um eine Methoxy- oder Ethoxygruppe, insbesondere eine Methoxygruppe, handelt.

5. Härtbare Zusammensetzung nach einem der vorhergehenden Ansprüche, **dadurch gekennzeichnet, dass** das alkoxy- und / oder acyloxysilanterminierte Polymer ein Grundgerüst aufweist, das ausgewählt ist aus der Gruppe Polyurethane, Polyether, Polyester, Polyacrylate, Polymethacrylate, Polyacrylamide, Polymethacrylamide, Polyvinylester, Polyolefine, Alkydharze, Phenolharze, Vinylpolymere, Styrol-Butadien-Copolymere, sowie Copolymere aus einem oder mehreren der vorgenannten Grundgerüste.

6. Härtbare Zusammensetzung nach einem der vorhergehenden Ansprüche, **dadurch gekennzeichnet, dass** die Mikrohohlkugeln aus einem Copolymer bestehen, das durch Polymerisation von Methacrylnitril und mindestens einem Monomer M2 ausgewählt aus Acrylsäure, Methacrylsäure, Acrylsäurealkylestern und Methacrylsäurealkylestern erhältlich ist, wobei das Copolymer keine Einheiten enthält, die auf den Einbau weiterer Monomere zurückgehen.

7. Härtbare Zusammensetzung nach Anspruch 6, **dadurch gekennzeichnet, dass** die Mikrohohlkugeln aus einem Methacrylnitril-Methacrylsäuremethylester-Copolymer bestehen.

8. Härtbare Zusammensetzung nach einem der vorhergehenden Ansprüche, **dadurch gekennzeichnet, dass** die Mikrohohlkugeln in einer Menge von 0,01 bis 5 Gew.-%, bezogen auf das Gesamtgewicht der härtbaren Zusammensetzung, enthalten sind.

9. Härtbare Zusammensetzung nach einem der vorhergehenden Ansprüche, **dadurch gekennzeichnet, dass** keine Mikrohohlkugeln aus Vinylidenchlorid-haltigen Polymeren enthalten sind.

10. Härtbare Zusammensetzung nach einem der vorhergehenden Ansprüche, **dadurch gekennzeichnet, dass** keine chlorhaltigen Füllstoffe enthalten sind.

11. Härtbare Zusammensetzung nach einem der vorhergehenden Ansprüche, **dadurch gekennzeichnet, dass** sie einen Weichmacher enthält, insbesondere einen Weichmacher ausgewählt aus einem Fettsäureester, einem Dicarbonsäureester, einem Ester OH-Gruppen tragender oder epoxidierter Fettsäuren, einem Fett, einem Glykolsäureester, einem Phthalsäureester, einem Benzoesäureester, einem Phosphorsäureester, einem Sulfonsäureester, einem Trimellithsäureester, einem epoxidierten Weichmacher, einem Polyether-Weichmacher, einem Polystyrol, einem Kohlenwasserstoff-Weichmacher und einem chlorierten Paraffin, sowie Gemischen aus zwei oder mehreren davon.

12. Härtbare Zusammensetzung nach einem der vorhergehenden Ansprüche, **dadurch gekennzeichnet, dass** sie zinnfrei ist.

13. Härtbare Zusammensetzung nach einem der vorhergehenden Ansprüche, **dadurch gekennzeichnet, dass** sie
- 100 Gewichtsteile des alkoxy- und / oder acyloxysilanterminierten Polymers,
- 0,5 - 10 Gewichtsteile Haftvermittler,
- 5 - 150 Gewichtsteile Weichmacher,
- 0,01 - 1 Gewichtsteile Katalysator,
- 5 - 125 Gewichtsteile Füllstoff,
- 0,1 - 10 Gewichtsteile Trockenmittel, sowie gegebenenfalls
- 0 - 10 Gewichtsteile weitere Additive, wie Pigmente, Stabilisatoren, UV-Absorber, Alterungsschutzmittel, Antioxidantien, rheologische Hilfsmittel, Verdünner bzw. Reaktivverdünner und / oder Lösungsmittel, sowie Fungizide und Flammschutzmittel enthält,
wobei der Füllstoff die Mikrohohlkugeln aus einem Copolymer, das durch Polymerisation von Methacrylnitril und mindestens einem Monomer M2 ausgewählt aus Acrylsäure, Methacrylsäure, Acrylsäurealkylestern und Methacrylsäurealkylestern erhältlich ist, wobei das Copolymer maximal 5 Gew.-% Einheiten enthält, die auf den Einbau weiterer Monomere zurückgehen und frei von chlorhaltigen Einheiten ist, enthält.

14. Verfahren zur Herstellung einer härtbaren Zusammensetzung nach einem der Ansprüche 1 bis 13, **dadurch gekennzeichnet, dass** mindestens
a) ein alkoxy- und / oder acyloxysilanterminiertes Polymer mit mindestens einer Endgruppe der allgemeinen Formel (I)
-Aₙ-R-SiXYZ (I),
worin
- A für eine zweibindige Bindegruppe,
- R für einen zweibindigen, gegebenenfalls ein Heteroatom enthaltenden Kohlenwasserstoffrest mit 1 - 12 C-Atomen, und
- X, Y, Z jeweils unabhängig voneinander für einen C₁-C₈ - Alkyl-, C₁-C₈ - Alkoxy- oder C₁-C₈ - Acyloxyrest stehen, wobei mindestens einer der Reste X, Y, Z ein C₁-C₈ - Alkoxy- oder C₁-C₈ - Acyloxyrest ist, und
- n für 0 oder 1 steht; und
b) Mikrohohlkugeln aus einem Copolymer, das durch Polymerisation von Methacrylnitril und mindestens einem Monomer M2 ausgewählt aus Acrylsäure, Methacrylsäure, Acrylsäurealkylestern und Methacrylsäurealkylestern erhältlich ist, wobei das Copolymer maximal 5 Gew.-% Einheiten enthält, die auf den Einbau weiterer Monomere zurückgehen und frei von chlorhaltigen Einheiten ist,
sowie gegebenenfalls Haftvermittler, Katalysator, Trockenmittel, Weichmacher, weitere Füllstoffe, und/oder weitere Additive miteinander gemischt werden.

15. Verwendung einer härtbaren Zusammensetzung nach einem der Ansprüche 1 bis 13 oder einer härtbaren Zusammensetzung hergestellt nach einem Verfahren nach Anspruch 14 zum Verkleben von Kunststoffen, Metallen, Glas, Keramik, Holz, Holzwerkstoffen, Papier, Papierwerkstoffen, Gummi und Textilien oder zum Abdichten von Bauwerken oder Teilen davon.

## Claims

1. A curable composition, comprising
a. an alkoxysilane- and/or acyloxysilane-terminated polymer containing at least one end group of the general Formula (I)
-Aₙ-R-SiXYZ (I),
in which
- A stands for a divalent binding group,
- R stands for a divalent C₁-C₁₂ hydrocarbon group that optionally contains a heteroatom, and
- X, Y, Z each independently of one another stand for a C₁-C₈ alkyl, C₁-C₈ alkoxy or C₁-C₈ acyloxy group, wherein at least one of the groups X, Y, Z is a C₁-C₈ alkoxy or C₁-C₈ acyloxy group, and
- n stands for 0 or 1, and
b. hollow microspheres, made of a copolymer that is obtainable by polymerizing methacrylonitrile and at least one monomer M2, selected from acrylic acid, methacrylic acid, acrylic acid alkyl esters and methacrylic acid alkyl esters, wherein the copolymer comprises maximum 5 wt.% of units incorporated from additional monomers, and is free of chlorine-containing units.

2. The curable composition according to claim 1, **characterised in that** the alkoxysilane- and/or acyloxysilane-terminated polymer possesses at least two end groups of the general Formula (I).

3. The curable composition according to claim 1 or 2, **characterised in that** X stands for a C₁-C₈ alkyl group and Y and Z each stand for a C₁-C₈ alkoxy group or X, Y and Z each stand for a C₁-C₈ alkoxy group.

4. The curable composition according to one of the previous claims, **characterised in that** the C₁-C₈ alkyl group is a methyl or ethyl group, in particular a methyl group, and the C₁-C₈ alkoxy group is a methoxy or ethoxy group, in particular a methoxy group.

5. The curable composition according to one of the previous claims, **characterised in that** the backbone of the alkoxysilane- and/or acyloxysilane-terminated polymer is selected from the group polyurethanes, polyethers, polyesters, polyacrylates, polymethacrylates, polyacrylamides, polymethacrylamides, polyvinyl esters, polyolefines, alkyd resins, phenol resins, vinyl polymers, styrene-butadiene copolymers, as well as copolymers of one or more of the cited backbones.

6. The curable composition according to one of the previous claims, **characterised in that** the hollow microspheres consist of a copolymer that is obtainable by polymerizing methacrylonitrile and at least one monomer M2, selected from acrylic acid, methacrylic acid, acrylic acid alkyl esters and methacrylic acid alkyl esters, wherein the copolymer does not comprise any units incorporated from additional monomers.

7. The curable composition according to claim 6, **characterised in that** the hollow microspheres consist of a methacrylonitrile-methyl methacrylate copolymer.

8. The curable composition according to one of the previous claims, **characterised in that** it comprises the hollow microspheres in an amount of 0.01 to 5 wt.%, based on the total weight of the curable composition.

9. The curable composition according to one of the previous claims, **characterised in that** it comprises no hollow microspheres of vinylidene chloride-containing polymers.

10. The curable composition according to one of the previous claims, **characterised in that** it comprises no chlorine-containing fillers.

11. The curable composition according to one of the previous claims, **characterised in that** it comprises a plasticizer, in particular a plasticizer selected from a fatty acid ester, a dicarboxylic acid ester, an ester of a fatty acid carrying OH-groups or of an epoxidized fatty acid, a fat, an ester of glycolic acid, an ester of phthalic acid, an ester of benzoic acid, an ester of phosphoric acid, an ester of sulfonic acid, an ester of trimellitic acid, an epoxidized plasticizer, a polyether plasticizer, a polystyrene, a hydrocarbon plasticizer and a chlorinated paraffin, as well as mixtures of two or more thereof.

12. The curable composition according to one of the previous claims, **characterised in that** it is free of tin.

13. The curable composition according to one of the previous claims, **characterised in that** it comprises
- 100 parts by weight of the alkoxysilane- and/or acyloxysilane-terminated polymer,
- 0.5 - 10 parts by weight of adhesion promoter,
- 5 - 150 parts by weight of plasticizer,
- 0.01 - 1 part by weight of catalyst,
- 5 - 125 parts by weight of filler,
- 0.1 - 10 parts by weight of drying agent, as well as optionally
- 0 - 10 parts by weight of other additives, such as pigments, stabilizers, UV-absorbers, anti-aging agents, antioxidants, rheological aids, diluents or reactive diluents and/or solvents, as well as fungicides and flame retardants,
wherein the filler comprises the hollow microspheres, made of a copolymer that is obtainable by polymerizing methacrylonitrile and at least one monomer M2, selected from acrylic acid, methacrylic acid, acrylic acid alkyl esters and methacrylic acid alkyl esters, wherein the copolymer comprises maximum 5 wt.% of units incorporated from additional monomers, and is free of chlorine-containing units.

14. A process for manufacturing a curable composition according to one of claims 1 to 13, **characterised in that** at least
a) an alkoxysilane- and/or acyloxysilane-terminated polymer containing at least one end group of the general Formula (I)
-Aₙ-R-SiXYZ (I),
in which
- A stands for a divalent binding group,
- R stands for a divalent C₁-C₁₂ hydrocarbon group that optionally contains a heteroatom, and
- X, Y, Z each independently of one another stand for a C₁-C₈ alkyl, C₁-C₈ alkoxy or C₁-C₈ acyloxy group, wherein at least one of the groups X, Y, Z is a C₁-C₈ alkoxy or C₁-C₈ acyloxy group, and
- n stands for 0 or 1, and
b) hollow microspheres, made of a copolymer that is obtainable by polymerizing methacrylonitrile and at least one monomer M2, selected from acrylic acid, methacrylic acid, acrylic acid alkyl esters and methacrylic acid alkyl esters, wherein the copolymer comprises maximum 5 wt.% of units incorporated from additional monomers, and is free of chlorine-containing units, as well as optionally adhesion promoters, catalysts, drying agents, plasticizers, additional fillers, and/or additional additives,
are mixed together.

15. Use of a curable composition according to one of claims 1 to 13 or of a curable composition manufactured according to a process according to claim 14 for adhesively bonding plastics, metals, glass, ceramics, wood, wood materials, paper, paper materials, rubber and textiles or for sealing buildings or parts thereof.

## Revendications

1. Composition durcissable contenant :
a) un polymère à terminaison alcoxy- et/ou acyloxy-silane comprenant au moins un groupe terminal répondant à la formule générale (I) :
-Aₙ-R-SiXYZ (I)
dans laquelle
- A représente un groupe de liaison divalent ;
- R représente un résidu divalent d'hydrocarbure comprenant de 1 à 12 atomes de carbone, contenant le cas échéant un hétéroatome, et
- X, Y, Z représentent chaque fois indépendamment l'un de l'autre un résidu alkyle en C₁-C₈, un résidu alcoxy en C₁-C₈ ou un résidu acyloxy en C₁-C₈ ; dans lequel au moins un des résidus X, Y, Z est un résidu alcoxy en C₁-C₈ ou acyloxy en C₁-C₈ ; et
- n est égal à 0 ou 1 ; et
b) des microbilles creuses à base d'un copolymère que l'on obtient par polymérisation de méthacrylonitrile et d'au moins un monomère M2 choisi parmi l'acide acrylique, l'acide méthacrylique, des esters alkyliques, d'acide acrylique et des esters alkyliques d'acide méthacrylique, le copolymère contenant des unités qui proviennent de l'incorporation d'autres monomères, au maximum à concurrence de 5 % en poids, et étant exempt d'unités chlorées.

2. Composition durcissable selon la revendication 1, **caractérisée en ce que** le polymère à terminaison alcoxy- et/ou acyloxy-silane présente au moins deux groupes terminaux répondant à la formule générale (I).

3. Composition durcissable selon la revendication 1 ou 2, **caractérisée en ce que** X représente un résidu alkyle en C₁-C₈, et Y et Z représentent à chaque fois un résidu alcoxy en C₁-C₈ ou bien X, Y et Z représentent à chaque fois un résidu alcoxy en C₁-C₈.

4. Composition durcissable selon l'une quelconque des revendications précédentes, **caractérisée en ce que**, en ce qui concerne le groupe alkyle en C₁-C₈, il s'agit d'un groupe méthyle ou d'un groupe éthyle, en particulier d'un groupe méthyle, et en ce qui concerne le groupe alcoxy en C₁-C₈, il s'agit d'un groupe méthoxy ou d'un groupe éthoxy, en particulier d'un groupe méthoxy.

5. Composition durcissable selon l'une quelconque des revendications précédentes, **caractérisée en ce que** le polymère à terminaison alcoxy- et/ou acyloxy-silane présente un squelette de base qui est choisi parmi le groupe des polyuréthanes, des polyéthers, des polyesters, des polyacrylates, des polyméthacrylates, des polyacrylamides, des polyméthacrylamides, des esters polyvinyliques, des polyoléfines, des résines alkydes, des résines phénoliques, des polymères vinyliques, des copolymères de styrène-butadiène, ainsi que des copolymères à base d'un ou de plusieurs des squelettes de base susmentionnés.

6. Composition durcissable selon l'une quelconque des revendications précédentes, **caractérisée en ce que** les microbilles creuses sont constituées d'un copolymère que l'on obtient par polymérisation de méthacrylonitrile et d'au moins un monomère M2 choisi parmi l'acide acrylique, l'acide méthacrylique, des esters alkyliques d'acide acrylique et des esters alkyliques d'acide méthacrylique, le copolymère ne contenant pas d'unités qui proviennent de l'incorporation d'autres monomères.

7. Composition durcissable selon la revendication 6, **caractérisée en ce que** les microbilles creuses sont constituées d'un copolymère de méthacrylonitrile-ester méthylique de l'acide méthacrylique.

8. Composition durcissable selon l'une quelconque des revendications précédentes, **caractérisée en ce que** les microbilles creuses sont contenues en une quantité de 0,01 à 5 % en poids, rapportés au poids total de la composition durcissable.

9. Composition durcissable selon l'une quelconque des revendications précédentes, **caractérisée en ce qu'**elle ne contient aucune microbille creuse à base de polymères contenant du chlorure de vinylidène.

10. Composition durcissable selon l'une quelconque des revendications précédentes, **caractérisée en ce qu'**elle ne contient aucune matière de charge chlorée.

11. Composition durcissable selon l'une quelconque des revendications précédentes, **caractérisée en ce qu'**elle contient un plastifiant, en particulier un plastifiant choisi parmi un ester d'acide gras, un ester d'acide dicarboxylique, un ester d'acide gras portant des groupes OH ou époxydé, une graisse, un ester d'acide glycolique, un ester d'acide phtalique, un ester d'acide benzoïque, un ester d'acide phosphorique, un ester d'acide sulfonique, un ester d'acide trimellitique, un plastifiant époxydé, un plastifiant de polyéther, un polystyrène, un plastifiant d'hydrocarbure et une paraffine chlorée, ainsi que des mélanges de deux d'entre eux ou plus.

12. Composition durcissable selon l'une quelconque des revendications précédentes, **caractérisée en ce qu'**elle est exempte d'étain.

13. Composition durcissable selon l'une quelconque des revendications précédentes, **caractérisée en ce qu'**elle contient :
- 100 parties en poids du polymère à terminaison alcoxy- et/ou acyloxy-silane ;
- de 0,5 à 10 parties en poids d'un agent améliorant l'adhérence ;
- de 5 à 150 parties en poids d'un plastifiant ;
- de 0,01 à 1 partie en poids d'un catalyseur ;
- de 5 à 125 parties en poids de matière de charge ;
- de 0,1 à 10 parties en poids d'un dessiccateur; et de manière facultative
- de 0 à 10 parties en poids d'autres additifs tels que des pigments, des stabilisateurs, des absorbants UV, des agents de protection contre le vieillissement, des antioxydants, des adjuvants rhéologiques, des diluants, respectivement des diluants réactifs et/ou des solvants, ainsi que des fongicides et des agents ignifuges ;
la matière de charge contenant les microbilles creuses à base d'un copolymère que l'on obtient par polymérisation de méthacrylonitrile et d'au moins un monomère M2 choisi parmi l'acide acrylique, l'acide méthacrylique, des esters alkyliques d'acide acrylique et des esters alkyliques d'acide méthacrylique, le copolymère contenant des unités qui proviennent de l'incorporation d'autres monomères, au maximum à concurrence de 5 % en poids, et étant exempt d'unités chlorées.

14. Procédé pour la préparation d'une composition durcissable selon l'une quelconque des revendications 1 à 13, **caractérisé en ce qu'**on mélange les uns avec les autres, au moins :
a) un polymère à terminaison alcoxy- et/ou acyloxy-silane comprenant au moins un groupe terminal répondant à la formule générale (I) :
-Aₙ-R-SiXYZ (I)
dans laquelle
- A représente un groupe de liaison divalent ;
- R représente un résidu divalent d'hydrocarbure comprenant de 1 à 12 atomes de carbone, contenant le cas échéant un hétéroatome, et
- X, Y, Z représentent chaque fois indépendamment l'un de l'autre un résidu alkyle en C₁-C₈, un résidu alcoxy en C₁-C₈ ou un résidu acyloxy en C₁-C₈ dans lequel au moins un des résidus X, Y, Z est un résidu alcoxy en C₁-C₈ ou acyloxy en C₁-C₈ ; et
- n est égal à 0 ou 1 ; et
b) des microbilles creuses à base d'un copolymère que l'on obtient par polymérisation de méthacrylonitrile et d'au moins un monomère M2 choisi parmi l'acide acrylique, l'acide méthacrylique, des esters alkyliques d'acide acrylique et des esters alkyliques d'acide méthacrylique, le copolymère contenant des unités qui proviennent de l'incorporation d'autres monomères, au maximum à concurrence de 5 % en poids, et étant exempt d'unités chlorées, et éventuellement des agents améliorant l'adhérence, des catalyseurs, des dessiccateurs, des plastifiants, d'autres matières de charge et/ou d'autres additifs.

15. Utilisation d'une composition durcissable selon l'une quelconque des revendications 1 à 13 ou d'une composition durcissable que l'on prépare conformément à un procédé selon la revendication 14 pour le collage de matières synthétiques, de métaux, de verre, de céramique, de bois, de matériaux à base de bois, de papier, de matériaux à base de papier, de caoutchouc et de textiles, ou bien pour l'étanchéité de composants ou de parties de ces derniers.
